# FASCICULE DE BREVET EUROPEEN

(11) **EP 4 077 446 B1**
(45) Date de publication et mention de la délivrance du brevet: **23.08.2023**
(21) Numéro de dépôt: 20824554.8
(22) Date de dépôt: 15.12.2020
(51) Int. Cl.: C08G 18/10, C08G 18/12, C08G 18/28, C08G 18/48, C08G 18/76, C08G 18/78, C09D 175/04, C09J 175/04, C08L 75/04, C08G 18/30

(54) **POLYIMINES ET LEURS UTILISATIONS**
POLYIMINE UND IHRE VERWENDUNGEN
POLYIMINES AND USES THEREOF

(30) Priorité: 19.12.2019 EP 19306695
(43) Date de publication de la demande: 26.10.2022
(73) Titulaire: Bostik SA, 92700 Colombes (FR)
(72) Inventeur: FOUQUAY, Stéphane, 60280 VENETTE (FR); SANZ, Federico, 60280 VENETTE (FR)
(74) Mandataire: Arkema Patent
(86) Numéro de dépôt international: PCT/EP2020/086217
(87) Numéro de publication internationale: WO 2021/122595

(56) Documents cités:
- US-A- 3 392 148
- US-A1- 2006 149 025
- US-A1- 2007 129 522
- US-A1- 2010 190 014

## Description

### DOMAINE DE L'INVENTION

La présente invention concerne une nouvelle famille de polyimines, ainsi que les compositions les comprenant.

La présente invention concerne également l'utilisation de ces polyimines dans des compositions adhésives, des mastics ou des revêtements.

### ARRIERE-PLAN TECHNIQUE

Les (poly)aldimines sont des produits de condensation de polyamines primaires et d'e aldéhydes, et constituent une classe de composés bien connue. Par contact avec l'eau, les (poly)aldimines peuvent s'hydrolyser en amines et aldéhydes correspondants. En raison de leurs propriétés, les aldimines peuvent également être utilisées comme une forme protégée d'amines.

Les aldimines sont notamment utiles dans les compositions adhésives à base de polyuréthanes réticulables à l'humidité, notamment dans les mastics ainsi que dans les compositions adhésives à base d'époxydes. Leur utilisation en tant que durcisseur latent activables à l'humidité dans des systèmes à base de polyuréthane permet avantageusement d'éviter la formation de bulles, dans la mesure où la réticulation avec les aldimines (amines bloquées) ne conduit pas à la libération de CO₂ (au contraire de la réticulation directe des groupes isocyanates en présence d'humidité).

Toutefois, les aldimines (notamment les aldimines aromatiques) présentent parfois le désavantage de libérer des aldéhydes volatiles et odorants, lorsqu'elles s'hydrolysent au cours de la réticulation des mastics. US2007/0129522A1 et US2010/0190014A1 décrivent une composition réticulable comprenant un polyisocyanate et au moins une aldimine.

Il existe donc un besoin pour de nouvelles (poly)aldimines permettant de remédier au moins en partie à au moins l'un des inconvénients susmentionnés.

### DESCRIPTION DE L'INVENTION

### A. Composition de mastic

La présente invention concerne une composition de mastic réticulable à l'humidité comprenant :
- au moins un polyuréthane P comprenant au moins deux fonctions terminales NCO ;
- au moins une polyimine A obtenue par un procédé comprenant une étape de réaction entre au moins :
   a) un (poly)uréthane-aldéhyde comprenant au moins 2 fonctions aldéhydes ;
   b) une diamine primaire;
   c) éventuellement en présence d'une monoamine primaire ou d'un monoaldéhyde si le rapport molaire -CHO/NH₂ est différent de 1 ;
   ou entre :
   i) une dihydroxyaldimine ; et
   ii) un (poly)isocyanate D choisi parmi les isocyanates et les polyuréthanes comprenant au moins deux fonctions terminales NCO ;
   iii) éventuellement en présence d'une monohydroxyaldimine ou d'un monoisocyanate si le rapport molaire NCO/OH est différent de 1.

### Polyuréthane P

Le polyuréthane P comprenant au moins deux fonctions terminales NCO peut être obtenu par toute méthode conventionnelle connue de l'homme du métier. Le polyuréthane P est notamment obtenu par réaction de polyaddition entre une composition de polyol(s) et une composition de polyisocyanate(s), éventuellement en présence d'un catalyseur.

### Polyol(s)

La composition de polyol(s) susmentionnée peut être constituée d'un polyol ou d'un mélange de polyols.

Le(s) polyol(s) utilisable(s) peu(ven)t être choisi(s) parmi celui(ceux) possédant une masse molaire ou une masse moléculaire moyenne en nombre (Mn) allant de 60 g/mol à 22 000 g/mol, de préférence de 600 g/mol à 18 000 g/mol, de préférence 1 000 g/mol à 12 000 g/mol, de préférence de 1 000 à 8 000 g/mol et encore plus préférentiellement de 1 000 g/mol à 4 000 g/mol.

La masse moléculaire moyenne en nombre des polyols peut être calculée à partir de l'indice d'hydroxyle (IOH) exprimé en mg KOH/g et de la fonctionnalité du polyol ou déterminée par des méthodes bien connues de l'homme du métier, par exemple par chromatographie d'exclusion stérique (ou SEC en anglais) avec étalon PEG (polyéthylène glycol).

Les polyols peuvent avoir une fonctionnalité hydroxyle allant de 2 à 6, de préférence 2 à 3. Dans le cadre de l'invention, et sauf mention contraire, la fonctionnalité hydroxyle d'un polyol est le nombre moyen de fonction hydroxyle par mole de polyol.

Le(s) polyol(s) utilisable(s) peu(ven)t être choisi(s) parmi les polyester polyols, les polyéther polyols, les polydiène polyols, les polycarbonate polyols, les poly(éther-carbonate) polyols, les pré-polymères à terminaisons -OH, et leurs mélanges.

Le(s) polyol(s) utilisable(s) peu(ven)t être choisi(s) parmi les polyols aliphatiques, les polyols arylaliphatiques, les polyols aromatiques, les polyols carbonates et les mélanges de ces composés.

Selon l'invention, le(s) polyester polyol(s) peuvent avoir une masse moléculaire moyenne en nombre allant de 500 g/mol à 22 000 g/mol, de préférence de 700 g/mol à 10 000 g/mol et encore plus préférentiellement de 900 à 6 000 g/mol.

Parmi les polyester polyols, on peut par exemple citer :
- les polyesters polyols d'origine naturelle telle que l'huile de ricin ;
- les polyesters polyols résultant de la condensation :
   - d'un ou plusieurs polyols aliphatiques (linéaires, ramifiés ou cycliques) ou aromatiques tels que par exemple l'éthanediol, le 1,2-propanediol, le 1,3-propanediol, le glycérol, le triméthylolpropane, le 1,6-hexanediol, le 1,2,6-hexanetriol, le butènediol, le cyclohexanediméthanol, le sucrose, le glucose, le sorbitol, le glycérol, le triméthylolpropane, le pentaérythritol, le mannitol, la triéthanolamine, la N-méthyldiéthanolamine, et leurs mélanges, avec
   - un ou plusieurs acide polycarboxylique ou son dérivé ester ou anhydride tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que par exemple l'anhydride maléique ou phtalique, ou une lactone telle que par exemple la caprolactone.

Les polyester polyols suscités peuvent être préparés de manière conventionnelle, et sont pour la plupart disponibles commercialement.

Parmi les polyesters polyols, on peut par exemple citer les produits suivants de fonctionnalité hydroxyle égale à 2 :
- le TONE^{®} 0240 (commercialisé par UNION CARBIDE) qui est une polycaprolactone de masse moléculaire moyenne en nombre d'environ 2000 g/mol, et un point de fusion de 50°C environ,
- le DYNACOLL^{®} 7381 (commercialisé par EVONIK) de masse moléculaire moyenne en nombre d'environ 3500 g/mol, et ayant un point de fusion de 65°C environ,
- le DYNACOLL^{®} 7360 (commercialisé par EVONIK) qui résulte de la condensation de l'acide adipique avec l'hexane diol, et a une masse moléculaire moyenne en nombre d'environ 3500 g/mol, et un point de fusion de 55°C environ,
- le DYNACOLL^{®} 7330 (commercialisé par EVONIK) de masse moléculaire moyenne en nombre d'environ 3500 g/mol, et ayant un point de fusion de 85°C environ,
- le DYNACOLL^{®} 7363 (commercialisé par EVONIK) qui résulte également de la condensation de l'acide adipique avec l'hexane diol, et a une masse moléculaire moyenne en nombre d'environ 5500 g/mol, et un point de fusion de 57°C environ,
- le DYNACOLL ^{®}7250 (commercialisé par EVONIK) : polyester polyol ayant une viscosité de 180 Pa.s à 23°C, une masse moléculaire moyenne en nombre Mn égale à 5 500 g/mol, et une T_{g} égale à -50°C,
- le KURARAY ^{®} P-6010 (commercialisé par KURARAY) : polyester polyol ayant une viscosité de 68 Pa.s à 23°C, une masse moléculaire moyenne en nombre égale à 6 000 g/mol, et une T_{g} égale à -64°C,
- le KURARAY ^{®} P-10010 (commercialisé par KURARAY) : polyester polyol ayant une viscosité de 687 Pa.s à 23°C, et une masse moléculaire moyenne en nombre égale à 10 000 g/mol.

Selon un mode de réalisation préféré, le polyester polyol est choisie parmi : une polycaprolactone ; l'huile de ricin ; un polyester polyol résultant de la condensation de l'éthylène glycol, du propylène glycol, du 1,3-propanediol et/ou du 1,6-hexanediol avec l'acide adipique et/ou les différents isomères de l'acide phtalique ; et leurs mélanges.

Selon l'invention, le(s) polyéther polyol(s) peuvent avoir une masse moléculaire moyenne en nombre allant de 200 g/mol à 22 000 g/mol, de préférence de 600 g/mol à 18 000 g/mol, de préférence 1 000 g/mol à 12 000 g/mol, de préférence 1 000 à 4 000 g/mol et encore plus préférentiellement de 1 000 g/mol à 8 000 g/mol.

De préférence, le(s) polyéther polyol(s) a(ont) une fonctionnalité hydroxyle allant de 2 à 3.

Le(s) polyéther polyol(s) utilisable(s) selon l'invention est (sont) de préférence choisi(s) parmi les polyoxyalkylène-polyol, dont la partie alkylène, linéaire ou ramifiée, comprend de 1 à 4 atomes de carbone, de préférence de 2 à 3 atomes de carbone.

Plus préférentiellement, le(s) polyéther polyol(s) utilisable(s) selon l'invention est (sont) de préférence choisi(s) parmi les polyoxyalkylène diols ou polyoxyalkylène triols, et mieux encore des polyoxyalkylène diols, dont la partie alkylène, linéaire ou ramifiée, comprend de 1 à 4 atomes de carbone, de préférence de 2 à 3 atomes de carbone.

A titre d'exemple de polyoxyalkylène diols ou triols utilisables selon l'invention, on peut par exemple citer :
- les polyoxypropylène diol ou triol (aussi désignés par polypropylène glycols (PPG) diol ou triol) ayant une masse moléculaire moyenne en nombre allant de 400 g/mol à 22 000 g/mol et de préférence allant de 400 g/mol à 12 000 g/mol,
- les polyoxyéthylène diol ou triol (aussi désignés par polyéthylène glycols (PEG) diol ou triol) ayant une masse moléculaire moyenne en nombre allant de 400 g/mol à 22 000 g/mol et de préférence allant de 400 g/mol à 12 000 g/mol,
- les polyoxybutylène glycols (aussi désignés par polybutylène glycols (PBG) diol ou triol) ayant une masse moléculaire moyenne en nombre allant de 200 g/mol à 12 000 g/mol,
- les copolymères ou terpolymères de PPG/PEG/PBG diol ou triol ayant une masse moléculaire moyenne en nombre allant de 400 g/mol à 22 000 g/mol et de préférence allant de 400 g/mol à 12 000 g/mol,
- les polytétrahydrofurane (PolyTHF) diol ou triol ayant une masse moléculaire moyenne en nombre allant de 250 g/mol à 12 000 g/mol,
- les polytétraméthylène glycols (PTMG) ayant une masse moléculaire moyenne en nombre allant de 200 g/mol à 12 000 g/mol,
- et leurs mélanges.

De préférence, le(s) polyéther polyol(s) utilisable(s) est (sont) choisi(s) parmi les polyoxypropylène diols ou triols. Les polyéther polyols mentionnés ci-dessus peuvent être préparés de manière conventionnelle, et sont largement disponibles dans le commerce. Ils peuvent par exemple être obtenus par polymérisation de l'oxyde d'alkylène correspondant en présence d'un catalyseur à base d'un double complexe métal-cyanure.

A titre d'exemples de polyéther diols, on peut citer les polyoxypropylène diols commercialisés sous la dénomination « ACCLAIM^{®} » par la société COVESTRO, tels que l' « ACCLAIM^{®} 18200 » de masse moléculaire moyenne en nombre voisine de 18 700 g/mol, l' « ACCLAIM^{®} 12200 » de masse moléculaire moyenne en nombre voisine de 11 335 g/mol, l'« ACCLAIM^{®} 8200 » de masse moléculaire moyenne en nombre voisine de 8 057 g/mol, et l'« ACCLAIM^{®} 4200 » de masse moléculaire moyenne en nombre voisine de 4 020 g/mol, ou encore le polyoxypropylène diol commercialisé sous la dénomination « VORANOL P2000 » par la société DOW de masse moléculaire moyenne en nombre voisine de 2 004 g/mol.

A titre d'exemples de polyéther triols, on peut citer le polyoxypropylène triol commercialisés sous la dénomination « VORANOL CP3355 » par la société DOW, de masse moléculaire moyenne en nombre voisine de 3 554 g/mol.

Le(s) polydiène polyol(s) utilisable(s) selon l'invention peu(ven)t être choisi(s) de préférence parmi les polydiènes comportant des groupes hydroxyles terminaux, et leurs dérivés correspondants hydrogénés ou époxydés.

De préférence, le(s) polydiène polyol(s) utilisable(s) selon l'invention est (sont) choisi(s) parmi les polybutadiènes comportant des groupes hydroxyles terminaux, éventuellement hydrogénés ou époxydés. Préférentiellement, le(s) polydiène polyol(s) utilisable(s) selon l'invention est (sont) choisi(s) parmi les homopolymères et copolymères de butadiène comportant des groupes hydroxyles terminaux, éventuellement hydrogénés ou époxydés.

Dans le cadre de l'invention, et sauf mention contraire, on entend par « groupes hydroxyles terminaux » d'un polydiène polyol, les groupes hydroxyles situés aux extrémités de la chaîne principale du polydiène polyol.

Les dérivés hydrogénés mentionnés ci-dessus peuvent être obtenus par hydrogénation totale ou partielle des doubles liaisons d'un polydiène comportant des groupes hydroxyles terminaux, et sont donc saturé(s) ou insaturé(s).

Les dérivés époxydés mentionnés ci-dessus peuvent être obtenus par époxydation chémio sélective des doubles liaisons de la chaîne principale d'un polydiène comportant des groupes hydroxyles terminaux, et comportent donc au moins un groupe époxy dans sa chaîne principale.

A titre d'exemples de polybutadiène polyols, on peut citer les homopolymères de butadiène, saturé ou insaturé, comprenant des groupes hydroxyles terminaux, éventuellement époxydés, tels que par exemple ceux commercialisés sous la dénomination POLY BD^{®} ou KRASOL^{®} par la société CRAY VALLEY.

A titre d'exemple de polycarbonate diol, on peut citer le CONVERGE POLYOL 212-10 et CONVERGE POLYOL 212-20 commercialisés par la société NOVOMER respectivement de masse moléculaire en nombre (Mn) égales à 1000 et 2000 g/mol dont les indices hydroxyles sont respectivement de 112 et 56 mg KOH/g, le DESMOPHEN^{®} C XP 2716 commercialisé par COVESTRO de masse moléculaire en nombre (Mn) égale à 326 g/mol dont l'indice hydroxyle est de 344 mg KOH/g, les POLYOL C-590, C1090, C-2090 et C-3090 commercialisés par KURARAY ayant une masse moléculaire en nombre (Mn) allant de 500 à 3000 g/mol et un indice hydroxyle allant de 224 à 37 mg KOH/g.

### Polyisocyanate(s)

La composition de polyisocyanate(s) susmentionnée peut être constituée d'un polyisocyanate ou d'un mélange de polyisocyanates.

Le(s) polyisocyanate(s) utilisable(s) peu(ven)t être choisi(s) parmi ceux utilisés typiquement dans la synthèse d'un polyuréthane à terminaisons NCO.

Le(s) polyisocyanate(s) utilisable(s) peu(ven)t être aliphatique(s) (linéaire(s) ou ramifié(s)) ou aromatique(s), et éventuellement substitué(s).

De préférence, le(s) polyisocyanate(s) utilisable(s) pour la préparation du polyuréthane P est(sont) choisi(s) parmi les diisocyanates, les triisocyanates, et leurs mélanges.
Selon un mode de réalisation préféré, le(s) polyisocyanate(s) est(sont) choisi(s) dans le groupe constitué de l'isophorone diisocyanate (IPDI), du pentaméthylène diisocyanate (PDI), de l'hexaméthylène diisocyanate (HDI), de l'heptane diisocyanate, de l'octane diisocyanate, du nonane diisocyanate, du décane diisocyanate, de l'undécane diisocyanate, du dodécane diisocyanate, du 4,4'-méthylènebis(cyclohexylisocyanate) (4,4'-HMDI), du norbornane diisocyanate, du norbornène diisocyanate, du 1,4-cyclohexane diisocyanate (CHDI), du méthylcyclohexane diisocyanate, de l'éthylcyclohexane diisocyanate, du propylcyclohexane diisocyanate, du méthyldiéthylcyclohexane diisocyanate, du cyclohexane diméthylène diisocyanate, du 1,5-diisocyanato-2-méthylpentane (MPDI), du 1,6-diisocyanato-2,4,4-triméthylhexane, du 1,6-diisocyanato-2,2,4-triméthylhexane (TMDI), du 4-isocyanatométhyl-1,8-octane diisocyanate (TIN), du (2,5)-bis(isocyanatométhyl)bicyclo[2.2.1]heptane (2,5-NBDI), du (2,6)-bis(isocyanatométhyl)bicyclo[2.2.1]heptane (2,6-NBDI), du 1,3-bis(isocyanatomethyl)cyclohexane (1,3-H6-XDI), du 1,4-bis(isocyanatomethyl)-cyclohexane (1,4-H6-XDI), du xylylène-diisocyanate (XDI) (en particulier le m-xylylène diisocyanate (m-XDI)), du toluène diisocyanate (en particulier le 2,4-toluène diisocyanate (2,4-TDI) et/ou le 2,6-toluène diisocyanate (2,6-TDI)), du diphénylméthane diisocyanate (en particulier le 4,4'-diphénylméthane diisocyanate (4,4'-MDI) et/ou du 2,4'-diphénylméthane diisocyanate (2,4'-MDI)), du tétraméthylxylylène diisocyanate (TMXDI) (en particulier le tétraméthyl (méta)xylylène diisocyanate), d'un allophanate de HDI ou de PDI ayant par exemple les formules (Y1) et (Y2) suivantes : 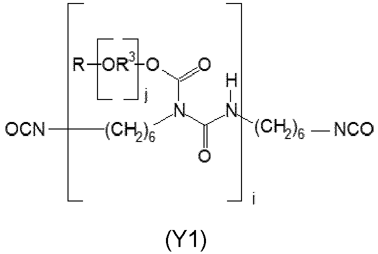 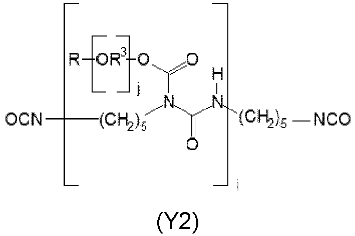
dans lesquelles i est un nombre entier allant de 1 à 2, j est un nombre entier allant de 0 à 9, et de préférence 2 à 5, R représente une chaine hydrocarbonée, saturée ou insaturée, cyclique ou acyclique, linéaire ou ramifiée, comprenant de 1 à 20 atomes de carbone, de préférence de 1 à 12 atomes de carbones, 6 à 14 atomes de carbone, R³ représente un groupe divalent alkylène, linéaire ou ramifié, ayant de 2 à 4 atomes de carbones, et de préférence un groupe divalent propylène ;
et de leurs mélanges.

Le MDI peut se présenter sous la forme d'un isomère ou d'un mélange d'isomères, tel que le 4,4'-MDI et/ou le 2,4'-MDI.

Le TDI peut se présenter sous la forme d'un isomère ou d'un mélange d'isomères, tel que le 2,4-TDI et/ou le 2,6-TDI.

Le(s) polyisocyanate(s) utilisable(s) pour préparer le polyuréthane utilisé selon l'invention sont typiquement largement disponibles dans le commerce. A titre d'exemple, on peut citer le SCURANATE^{®} TX commercialisé par la société VENCOREX, correspondant à un 2,4-TDI de pureté de l'ordre de 95%, le SCURANATE^{®} T100 commercialisé par la société VENCOREX, correspondant à un 2,4-TDI de pureté supérieure à 99% en poids, le DESMODUR^{®} l » commercialisé par la société COVESTRO, correspondant à un IPDI, ou encore l'ISONATE ^{®} M125 commercialisé par DOW, correspondant à un MDI contenant au moins 97Les triisocyanates peuvent être choisis parmi les isocyanurates, les biurets, et les adduits de diisocyanates et de triols.

En particulier, le(s) isocyanurate(s) peuvent être utilisé(s) sous la forme d'un mélange technique de (poly)isocyanurate(s) de pureté supérieure ou égale à 70% en poids isocyanurate(s).

Le(s) isocyanurate(s) de diisocyanate utilisable(s) selon l'invention peut(vent) répondre à la formule générale (W) suivante : 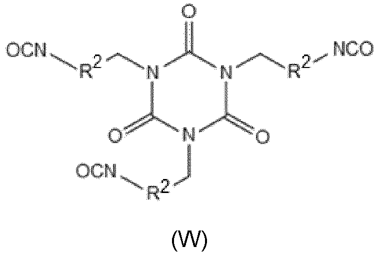 dans laquelle :
R² représente un groupe alkylène, linéaire ou ramifié, cyclique, aliphatique, arylaliphatique ou aromatique, comprenant de 4 à 9 atomes de carbones,
sous réserve que les groupes NCO ne soient pas reliés par une liaison covalente à un atome de carbone faisant parti d'un cycle hydrocarboné aromatique tel qu'un groupe phényle.

A titre d'exemple de trimères de diisocyanates utilisables selon l'invention, on peut citer :
- le trimère isocyanurate d'hexaméthylène diisocyanate (HDI) : 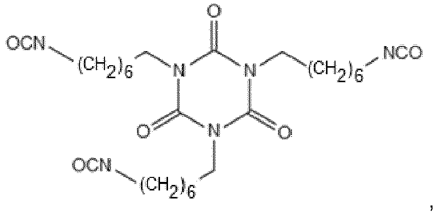
- le trimère isocyanurate d'isophorone diisocyanate (IPDI) : 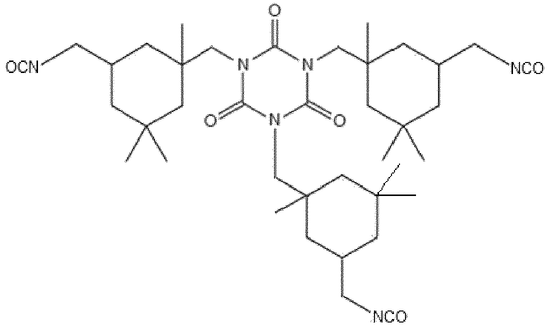
- le trimère isocyanurate de pentaméthylène diisocyanate (PDI) : 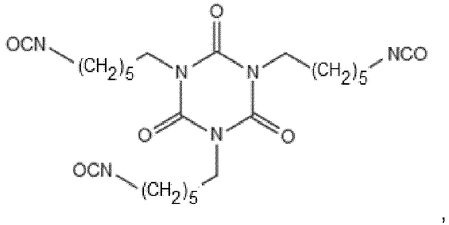
- le trimère isocyanurate du méta-xylylène diisocyanate (m-XDI) : 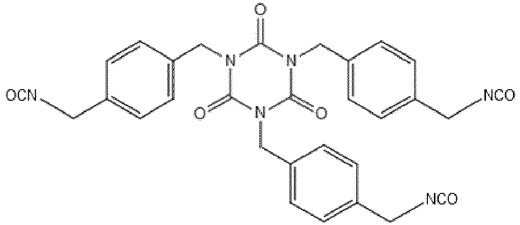
- le trimère isocyanurate du m-XDI, sous forme hydrogénée :

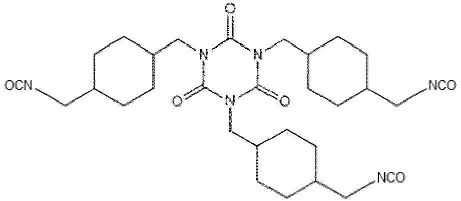

A titre d'exemple d'adduits de diisocyanates et de triols utilisables selon l'invention, on peut citer l'adduit de méta-xylylène diisocyanate et de triméthylolpropane, tel que représenté ci-dessous. Cet adduit est commercialisé par exemple par la société MITSUI CHEMICALS sous la dénomination « TAKENATE^{®} D-110N » :

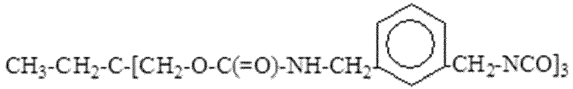

Dans le cadre de l'invention, on entend de manière équivalente les expressions « réaction de polyaddition » et « polyaddition ».

L'étape de polyaddition peut être réalisée à une température inférieure à 95°C, de préférence allant de 60°C à 90°C, plus préférentiellement allant de 65°C à 80°C.

L'étape de polyaddition peut être réalisée dans des conditions anhydres, par exemple sous atmosphère d'azote.

L'étape de polyaddition peut être réalisée dans des quantités de polyisocyanate(s) et de polyol(s) tels que le rapport molaire NCO/OH est strictement supérieur à 1, par exemple compris entre 1,1 et 2,5, de préférence entre 1,1 et 2,2, préférentiellement entre 1,2 et 2,0, par exemple entre 1,20 et 1,80, avantageusement entre 1,20 et 1,50, en particulier entre 1,30 et 1,40, de façon à obtenir avantageusement un polyuréthane à terminaisons NCO.

Dans le cadre de l'invention, et sauf mention contraire, le rapport molaire NCO/OH correspond au rapport molaire du nombre de groupes isocyanates (NCO) sur le nombre de groupes hydroxyles (OH) portés respectivement par les polyisocyanates et les polyols utilisés.

La masse moléculaire moyenne en nombre des polyuréthanes comprenant au moins deux fonctions NCO peut être mesurée par des méthodes bien connues de l'homme du métier, par exemple par chromatographie d'exclusion stérique (ou SEC en anglais) en utilisant des étalons de type polyéthylène glycol.

Le polyuréthane P comprenant au moins deux fonctions terminales NCO peut avoir un indice de polymolécularité allant de 1,5 à 3,5, de préférence de 2,0 à 3,3.

Dans le cadre de l'invention, l'indice de polymolécularité est défini comme le rapport M_{w} (masse moléculaire moyenne en poids) / Mₙ (masse moléculaire moyenne en nombre) du polyuréthane.

Le polyuréthane P comprenant au moins deux fonctions terminales NCO peut avoir une teneur massique en groupes NCO allant de 0,1 % à 6,0 %, de préférence de 0,5 % à 5,0 %, de préférence de 1,0 % à 4,0 %, de préférence de 1,5 % à 3,0 % et préférentiellement de 1,8 % à 2,5 %.

### Polyimine A

La composition de mastic réticulable à l'humidité selon l'invention comprend au moins une polyimine A obtenue par un procédé comprenant une étape de réaction entre au moins :
a) un (poly)uréthane-aldéhyde comprenant au moins deux fonctions aldéhydes;
b) une diamine primaire;
c) éventuellement en présence d'une monoamine ou d'un monoaldéhyde si le rapport molaire -CHO/-NH₂ est différent de 1.

### Poly(uréthane)-aldéhyde a)

Le (poly)uréthane-aldéhyde a) peut être un uréthane-aldéhyde ou un polyuréthane-aldéhyde.

Le (poly)uréthane-aldéhyde a) peut être obtenu par réaction entre :
- au moins un polyisocyanate C;
- au moins un aldéhyde-hydroxylé.

Le polyisocyanate C peut être un polyisocyanate monomérique, oligomérique ou polymérique comprenant au moins 2 fonctions -NCO, préférentiellement uniquement 2 fonctions -NCO.

Le polyisocyanate C peut être choisi parmi les triisocyanates, les diisocyanates, et les polyuréthanes comprenant au moins deux fonctions terminales NCO.

Typiquement, lorsque le polyisocyanate C est un diisocyanate ou un trisocyanate, le produit obtenu est un uréthane-aldéhyde.

Typiquement, lorsque le polyisocyanate C est un polyuréthane comprenant au moins deux fonctions terminales -NCO, le produit obtenu est un polyuréthane-aldéhyde.

Parmi les diisocyanate(s), on peut par exemple citer l'isophorone diisocyanate (IPDI), l'hexaméthylène diisocyanate (HDI), l'heptane diisocyanate, l'octane diisocyanate, le nonane diisocyanate, le décane diisocyanate, l'undécane diisocyanate, le dodécane diisocyanate, le 4,4'-méthylènebis(cyclohexylisocyanate) (4,4'-HMDI), le norbornane diisocyanate, le norbornène diisocyanate, le 1,4-cyclohexane diisocyanate (CHDI), le méthylcyclohexane diisocyanate, l'éthylcyclohexane diisocyanate, le propylcyclohexane diisocyanate, le méthyldiéthylcyclohexane diisocyanate, le cyclohexane diméthylène diisocyanate, le 1,5-diisocyanato-2-méthylpentane (MPDI), le 1,6-diisocyanato-2,4,4-triméthylhexane, le 1,6-diisocyanato-2,2,4-triméthylhexane (TMDI), le 4-isocyanatométhyl-1,8-octane diisocyanate (TIN), le (2,5)-bis(isocyanatométhyl)bicyclo[2.2.1]heptane (2,5-NBDI), le (2,6)-bis(isocyanatométhyl)bicyclo[2.2.1]heptane (2,6-NBDI), le 1,3-bis(isocyanatomethyl)cyclohexane (1,3-H6-XDI), le 1,4-bis(isocyanatomethyl)-cyclohexane (1,4-H6-XDI), le xylylène-diisocyanate (XDI) (en particulier le m-xylylène diisocyanate (m-XDI)), le toluène diisocyanate (en particulier le 2,4-toluène diisocyanate (2,4-TDI) et/ou le 2,6-toluène diisocyanate (2,6-TDI)), le diphénylméthane diisocyanate (en particulier le 4,4'-diphénylméthane diisocyanate (4,4'-MDI) et/ou le 2,4'-diphénylméthane diisocyanate (2,4'-MDI)), le tétraméthylxylylène diisocyanate (TMXDI) (en particulier le tétraméthyl (méta)xylylène diisocyanate), d'un allophanate de HDI ou de PDI ayant par exemple les formules (Y1) et (Y2) suivantes : 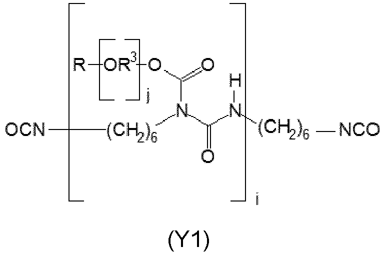 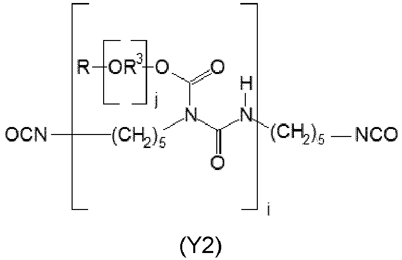
dans lesquelles i est un nombre entier allant de 1 à 2, j est un nombre entier allant de 0 à 9, et de préférence 2 à 5, R représente une chaine hydrocarbonée, saturée ou insaturée, cyclique ou acyclique, linéaire ou ramifiée, comprenant de 1 à 20 atomes de carbone, de préférence de 1 à 12 atomes de carbones, 6 à 14 atomes de carbone, R¹ représente un groupe divalent alkylène, linéaire ou ramifié, ayant de 2 à 4 atomes de carbones, et de préférence un groupe divalent propylène ;
et leurs mélanges.

De préférence, l'allophanate de formule (Y1) susmentionnée est tel que p, q, R et R³ sont choisis tel que le dérivé d'allophanate de HDI ci-dessus comprend une teneur en groupe isocyanate NCO allant de 12 à 14% en poids par rapport au poids dudit dérivé.

Les triisocyanates peuvent être choisis parmi les isocyanurates, les biurets, et les adduits de diisocyanates et de triols.

En particulier, le(s) isocyanurate(s) peuvent être utilisé(s) sous la forme d'un mélange technique de (poly)isocyanurate(s) de pureté supérieure ou égale à 70% en poids isocyanurate(s).

Le(s) isocyanurate(s) de diisocyanate utilisable(s) selon l'invention peut(vent) répondre à la formule générale (W) suivante : 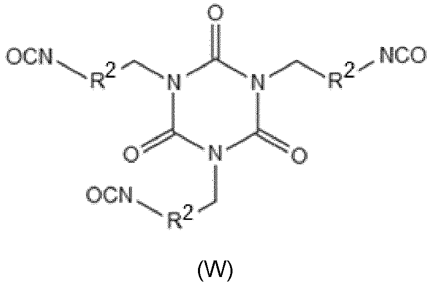 dans laquelle :
R² représente un groupe alkylène, linéaire ou ramifié, cyclique, aliphatique, arylaliphatique ou aromatique, comprenant de 4 à 9 atomes de carbones, sous réserve que les groupes NCO ne soient pas reliés par une liaison covalente à un atome de carbone faisant parti d'un cycle hydrocarboné aromatique tel qu'un groupe phényle.

A titre d'exemple de trimères de diisocyanates utilisables selon l'invention, on peut citer :
- le trimère isocyanurate d'hexaméthylène diisocyanate (HDI) : 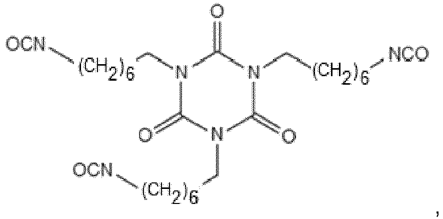
- le trimère isocyanurate d'isophorone diisocyanate (IPDI) : 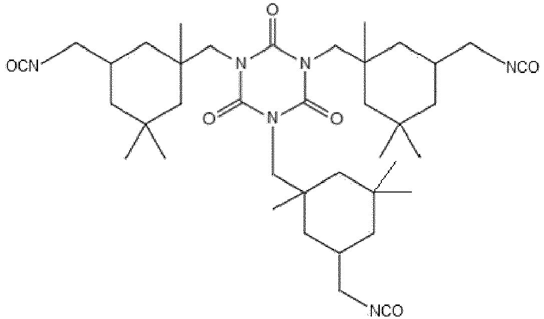
- le trimère isocyanurate de pentaméthylène diisocyanate (PDI) : 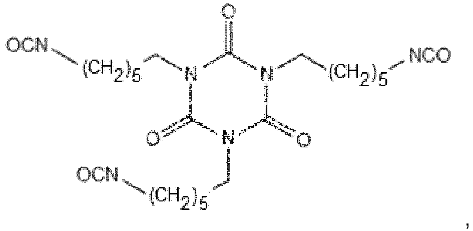
- le trimère isocyanurate du méta-xylylène diisocyanate (m-XDI) : 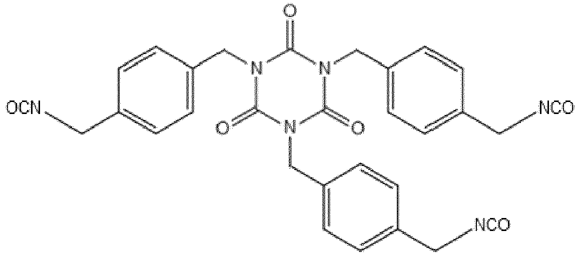
- le trimère isocyanurate du m-XDI, sous forme hydrogénée :

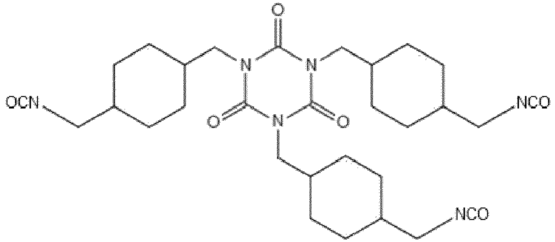

A titre d'exemple d'adduits de diisocyanates et de triols utilisables selon l'invention, on peut citer l'adduit de méta-xylylène diisocyanate et de triméthylolpropane, tel que représenté ci-dessous. Cet adduit est commercialisé par exemple par la société MITSUI CHEMICALS, Inc sous la dénomination « TAKENATE^{®} D-110N ».

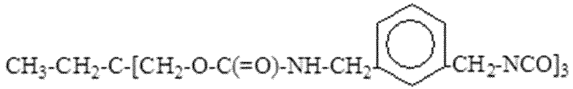

Les polyisocyanates C peuvent être des polyuréthanes comprenant au moins deux fonctions terminales NCO. Les polyuréthanes comprenant au moins deux fonctions terminales peuvent être obtenus par un procédé typique faisant réagir au moins un polyol avec au moins un polyisocyanate. De tels polyuréthanes peuvent être préparés par un procédé comprenant une réaction de polyaddition E1):
i) d'au moins un polyisocyanate de préférence choisi parmi les diisocyanates, les triisocyanates, et leurs mélanges ;
ii) avec au moins un polyol de préférence choisi parmi les polyéther polyols, les polydiène polyols, les polycarbonate polyols, les polyester polyols, et leurs mélanges ;
dans des quantités telles que le rapport molaire NCO/OH (r1) est strictement supérieur à 1, de préférence va de 1,6 à 1,9, et préférentiellement de 1,65 à 1,85.

Dans le cadre de l'invention, et sauf mention contraire, (r1) est le rapport molaire NCO/OH correspondant au rapport molaire du nombre de groupes isocyanates (NCO) sur le nombre de groupes hydroxyles (OH) portés par l'ensemble des polyisocyanate(s) et polyol(s) présents dans le milieu réactionnel de l'étape E1).

Lorsque le polyuréthane à terminaisons NCO est obtenu lors de l'étape E1) à partir d'un mélange de polyisocyanates ou de plusieurs polyisocyanates ajoutés successivement, le calcul du rapport (r1) tient compte d'une part des groupes NCO portés par l'ensemble des polyisocyanates présents dans le milieu réactionnel de l'étape E1), et d'autre part des groupes OH portés par le(s) polyol(s) présent(s) dans le milieu réactionnel de l'étape E1).

Lors de l'étape E1), la réaction de polyaddition est mise en oeuvre à une température de préférence inférieure à 95°C, et dans des conditions de préférence anhydres.

Les polyols de l'étape E1) peuvent être ceux mentionnés ci-dessus pour la préparation du polyuréthane P selon l'invention. Tous les modes de réalisation et modes préférés s'appliquent aux polyols utilisables pour la préparation du polyuréthane comprenant au moins deux fonctions NCO.

Les polyisocyanates utilisables dans l'étape E1) peuvent être les diisocyanates et triisocyanates mentionnés ci-dessus pour la préparation du polyisocyanate polymérique.

Selon un mode de réalisation préféré, l'étape E1) met en oeuvre au moins un diisocyanate, et notamment au moins un allophanate de HDI ayant par exemple la formule (Y1) susmentionnée.

Les polyisocyanates utilisables selon l'invention sont largement disponibles dans le commerce. A titre d'exemple, on peut citer le «SCURANATE^{®} TX » commercialisé par la société VENCOREX, correspondant à un 2,4-TDI de pureté de l'ordre de 95 %, le « SCURANATE^{®} T100 » commercialisé par la société VENCOREX, correspondant à un 2,4-TDI de pureté supérieure à 99% en poids, le « DESMODUR^{®} I » commercialisé par la société COVESTRO, correspondant à un IPDI, le « TAKENATE ^{™} 500 » commercialisé par MITSUI CHEMICALS correspondant à un m-XDI, , le « TAKENATE ^{™} 600 » commercialisé par MITSUI CHEMICALS correspondant à un m-H6XDI, le « VESTANAT^{®} H12MDI » commercialisé par EVONIK correspondant à un H12MDI, ou encore ceux de la série des « TOLONATE^{®} » commercialisés par la société VENCOREX, tel que le « TOLONATE^{®} X FLO 100 » correspondant à un dérivé d'allophanate de HDI de formule (Y1).

De préférence, le (poly)uréthane-aldéhyde a) est un (poly)uréthane-dialdéhyde.

De préférence, le (poly)uréthane-dialdéhyde a) comprend un radical allophanate.

De préférence, le (poly)uréthane-dialdéhyde a) est obtenu par réaction entre :
- au moins un polyisocyanate C comprenant au moins un radical allophanate; et
- au moins un aldéhyde-hydroxylé.

De façon encore plus préférée, au moins un polyisocyanate C est l'allophanate de HDI ayant notamment la formule (Y1) susmentionnée.

Les aldéhydes-hydroxylés peuvent avoir la formule (A) suivante : 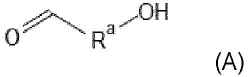 dans laquelle R^{a} représente un radical hydrocarboné divalent comprenant de 2 à 65 atomes de carbone, linéaire ou ramifié, saturé ou instauré, ledit radical pouvant éventuellement comprendre un ou plusieurs hétéroatomes.

Dans le cadre de l'invention, l'expression « radical hydrocarboné pouvant contenir des hétéroatomes » signifie que le radical peut contenir un hétéroatome soit sous la forme d'une fonction telle que par exemple une fonction carbonyle -C(=O), une fonction amide -C(=O)-NH- ou ester -C(=O)-O- / -O-C(=O)-, ou encore -O-C(=O)-NH-, -OR ou -NR-, ou alors sous forme d'un hétéroatome tel que par exemple -O-, -NH- ou -S-.

Les aldéhydes-hydroxylés peuvent notamment avoir la formule suivante : 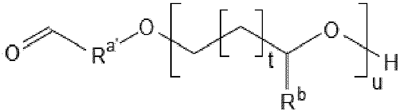 dans laquelle R^{a}' représente un radical hydrocarboné divalent comprenant de 2 à 65 atomes de carbone, linéaire ou ramifié, saturé ou instauré, ledit radical pouvant éventuellement comprendre un ou plusieurs hétéroatomes ; R^{b} représente H ou un radical alkyle linéaire ou ramifié comprenant de 1 à 7 atomes de carbone, préférentiellement de 1 à 3 atomes de carbone ; u représente un entier allant de 1 à 380, de préférence de 1 à 210, plus préférentiellement de 1 à 140, et encore plus préférentiellement de 1 à 10 ; et t représente un entier allant de 0 à 18, préférentiellement de 0 à 12, de préférence encore de 0 à 6, et encore plus préférentiellement de 0 à 2.

Les aldéhydes-hydroxylés de formule (A) peuvent avoir l'une des formules suivantes : 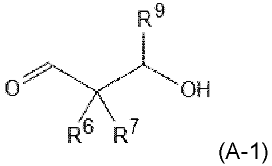 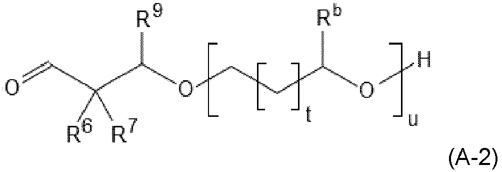 avec R⁶ et R⁷ représentant chacun, indépendamment l'un de l'autre, un radical hydrocarboné monovalent comprenant de 1 à 12 atomes de carbone, ou R⁶ et R⁷ forment ensemble un cycle aliphatique comprenant de 4 à 12 atomes de carbone, ledit cycle étant éventuellement substitué ; R⁹ représentant un hydrogène, un radical alkyle linéaire ou ramifié, un radical cycloalkyle, un radical arylalkyle, ou un radical alcoxycarbonyle comprenant de 1 à 12 atomes de carbone ; R^{b} représente H ou un radical alkyle linéaire ou ramifié comprenant de 1 à 7 atomes de carbone, préférentiellement de 1 à 3 atomes de carbones ;u représente un entier allant de 1 à 380, de préférence de 1 à 210, plus préférentiellement de 1 à 140, et encore plus préférentiellement de 1 à 10 ; et t représente un entier allant de 0 à 18, préférentiellement de 0 à 12, de préférence encore de 0 à 6, et encore plus préférentiellement de 0 à 2. 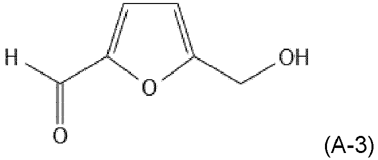 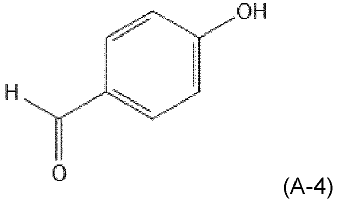 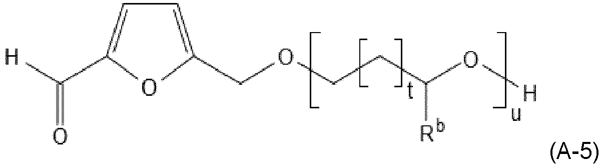 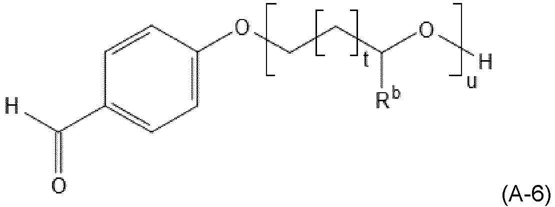 dans lesquelles :
- t est un entier allant de 0 à 18, préférentiellement de 0 à 12, de préférence 0 à 6 et encore plus préférentiellement de 0 à 2.
- u représente un entier allant de 1 à 380, de préférence de 1 à 210, plus préférentiellement de 1 à 140, et encore plus préférentiellement de 1 à 10 ; et t représente un entier allant de 0 à 18, préférentiellement de 0 à 12, de préférence encore de 0 à 6, et encore plus préférentiellement de 0 à 2;
- R^{b} représente H ou un radical alkyle allant de 1 à 7 atomes de carbone, préférentiellement de 1 à 3 atomes de carbone.

Parmi les aldéhydes-hydroxylés de formule (A-1), on peut par exemple citer le 2,2-diméthyl-3-hydroxypropanal, le 2-hydroxyméthyl-2-méthyl-butanal, le 2-hydroxyméthyl-2-éthyl-butanal, le 2-hydroxyméthyl-2-méthyl-pentanal, le 2-hydroxyméthyl-2-éthyl-hexanal, le 1-hydroxyméthyl-cyclopentanecarboxaldéhyde, le 1-hydroxyméthyl-cyclohexanecarboxaldéhyde, le 3-hydroxy-2-méthyl-2-phénylpropanal et le 3-hydroxy-2,2-diphényl-propanal.

Selon un mode de réalisation, les aldéhydes-hydroxylés sont choisis dans le groupe constitué du 7-hydroxy-3,7-diméthyloctanal (numéro CAS : 107-75-5), du 9-hydroxy-5,9-diméthyldéc-4-énal (numéro CAS : 926-50-1), du 4-hydroxybenzaldéhyde (numéro CAS : 123-08-0), du 5-hydroxyméthylfurfural, du 3-hydroxy-2,2-diméthyl-propanal (numéro CAS : 597-31-9), et de leurs mélanges.

Selon un mode de réalisation, le (poly)uréthane-aldéhyde est un (poly)uréthanedialdéhyde lequel est obtenu par réaction entre :
- a) au moins un polyisocyanate C comprenant au moins un radical allophanate ;
- b) au moins un aldéhyde-hydroxylé ;
dans des quantités telles que le rapport molaire NCO/OH (r2) va de 0,95 à 1,05, de préférence égal à 1.

Selon un mode de réalisation, le (poly)uréthane-aldéhyde a) a l'une des formules (I) ou (II) suivantes : 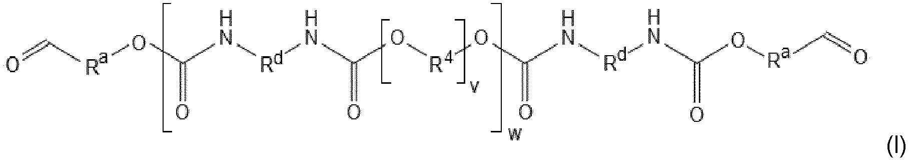 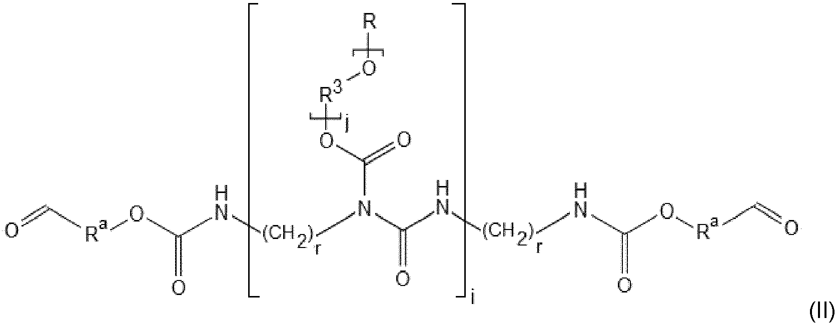 dans lesquelles :
- R^{a} est tel que défini ci-dessus ;
- R^{d} représente le radical suivant : 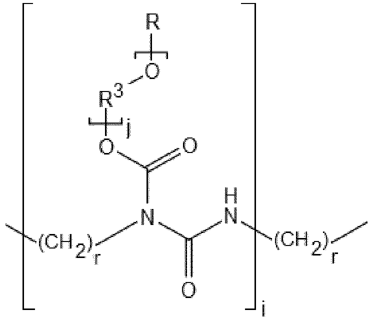 dans laquelle i est un nombre entier allant de 1 à 2, j est un nombre entier allant de 0 à 9, et de préférence 2 à 5, r est un nombre entier allant de 1 à 10, R représente une chaine hydrocarbonée, saturée ou insaturée, cyclique ou acyclique, linéaire ou ramifiée, comprenant de 1 à 20 atomes de carbone, de préférence de 1 à 12 atomes de carbones, 6 à 14 atomes de carbone, R³ représente un groupe divalent alkylène, linéaire ou ramifié, ayant de 2 à 4 atomes de carbones, et de préférence un groupe divalent propylène ;
- R⁴ représente un radical hydrocarboné divalent issu d'un polyol par remplacement de chacun des deux groupes hydroxyles par une valence libre ;
- v est un nombre entier tel que la masse moléculaire moyenne en nombre du bloc polyéther de formule -[OR⁴]ᵥ- va de 60 g/mol à 22 000 g/mol, de préférence de 600 g/mol à 18 000 g/mol, de préférence 1 000 g/mol à 12 000 g/mol, de préférence de 1 000 à 8 000 g/mol et encore plus préférentiellement de 1 000 g/mol à 4 000 g/mol.
- w est un nombre entier tel que la masse moléculaire moyenne en nombre (Mn) du (poly)uréthane-aldéhyde de formule (I) va de 500 g/mol à 22 000 g/mol, de préférence de 500 g/mol à 18 000 g/mol, de préférence encore de 500 g/mol à 12 000 g/mol, et encore plus préférentiellement de 600 à 5 000 g/mol.

Parmi les composés de formule (II), on peut par exemple citer les composés de formules suivantes : 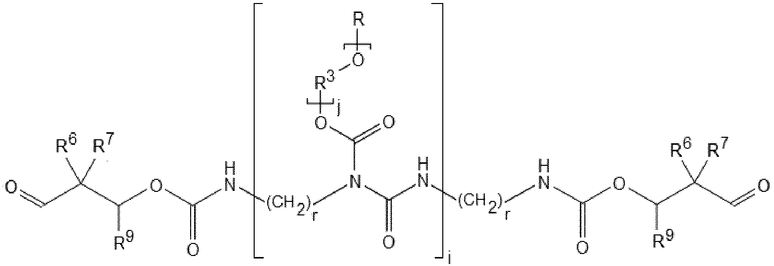 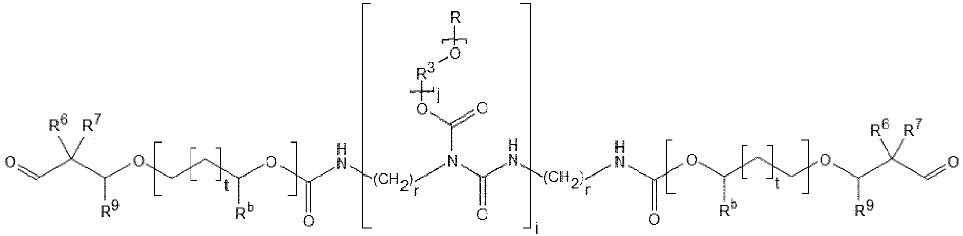 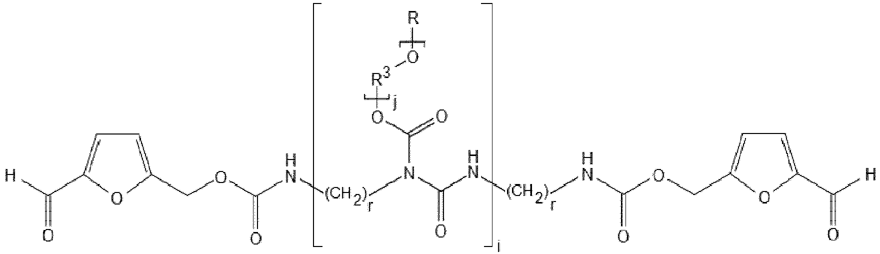 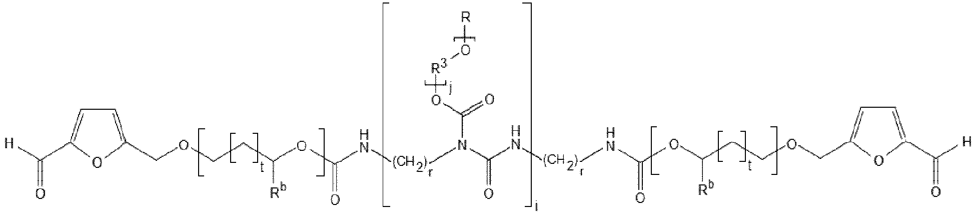 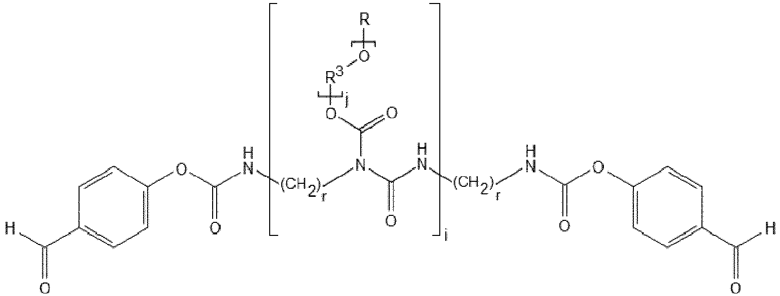 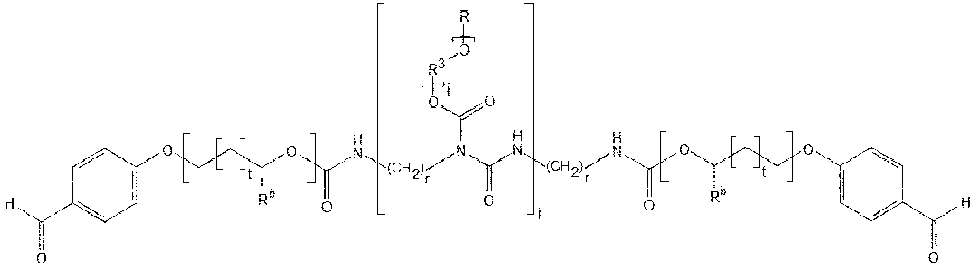 dans lesquelles R, R^{b}, R³, r, t, u, i, j, R⁶, R⁷, R⁹ sont tels que définis précédemment.

### Diamine primaire b)

Dans le cadre de l'invention, et sauf mention contraire, on entend par « diamine primaire » une amine comprenant au sein de sa structure uniquement deux groupes -NH₂. Les diamines primaires peuvent avoir la formule générique suivante :

H₂N-R-NH₂

dans laquelle R représente un radical organique dépourvu de groupe -NH₂ additionnel.

Les diamines primaires ont de préférence une masse moléculaire moyenne en nombre (Mn) supérieure ou égale à 60 g/mol, de préférence supérieur ou égale à 140 g/mol, préférentiellement supérieure ou égale à 200 g/mol, avantageusement supérieure ou égale à 500 g/mol.

Selon un mode de réalisation, la diamine primaire est choisie dans le groupe constitué des amines aliphatiques linéaires ou ramifiées ; des polyamines aliphatiques ; des polyétheramines ; des polyamidoamines ; des amines grasses dimères ; des dérivés de diaminoacides tels que par exemple leurs dérivés diaminoesters ou diaminoamides ; des amines de formule (B) suivante H₂N-CH₂-Z-CH₂₋NH₂ dans laquelle Z représente un radical hydrocarboné divalent, linéaire ou ramifié, cyclique, aliphatique ou aromatique, saturé ou insaturé, comprenant de préférence de 1 à 38 atomes de carbone, ledit radical hydrocarboné étant éventuellement interrompu par un ou plusieurs hétéroatomes choisis parmi -S-, -O-et/ou un ou plusieurs groupes divalents amine tertiaire -NR'- avec R' représentant un groupe alkyle linéaire ou ramifié, saturé ou insaturé, comprenant 1 à 22 atomes de carbone, de préférence de 1 à 18, de préférence de 1 à 14, préférentiellement de 1 à 10 et avantageusement de 1 à 6 atomes de carbone ;
et de leurs mélanges.

Parmi les diamines primaires de formule (B), on peut par exemple citer la 1,6-hexamétylènediamine (HMDA), la 1,10-décanediamine : H₂N-(CH₂)₁₀-NH₂, la 1,12 dodécanediamine : H₂N-(CH₂)₁₂-NH₂, les polyétherdiamines de formules H₂N-CH₂-CH₂-O-CH₂-CH₂-O-CH₂-CH₂-NH₂ et H₂N-CH₂-CH₂-CH₂-O-CH₂-CH₂-O-CH₂-CH₂-CH₂-NH₂ (disponible par exemple respectivement sous les dénominations commerciales «JEFFAMINE^{®} EDR 148 » et « JEFFAMINE^{®} EDR 176 » auprès de la société HUNTSMAN) ainsi que

Selon un mode de réalisation, la diamine primaire est choisie parmi les polyétheramines de formule (C) suivante H₂N-CH(Me)-Z'-CH(Me)₋NH₂ dans laquelle Z' représente Z tel que défini ci-dessus, en particulier choisie parmi :
- les polyétherdiamines telles que par exemple :
   - les polyétherdiamines répondant à la formule ci-dessous : 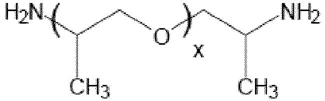 dans laquelle x est un nombre entier tel que l'alcalinité primaire de la polyétherdiamine soit comprise entre 0,5 et moins de 10 méq/g, de préférence x allant de 2 à 68 (de telles polyétherdiamines sont par exemple commercialisées sous la dénomination JEFFAMINES D-230, D-400, D-2000 et D-4000 par la société HUNTSMAN et présentent des alcalinités primaires respectives de 8,7, 5,0, 1,0 et 0,5 méq/g) ;
   - les polyétherdiamines répondant à la formule ci-dessous : 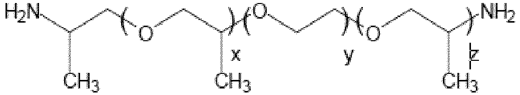 dans laquelle x, y et z sont des nombres entiers tel que l'alcalinité primaire soit comprise entre 1 et moins de 10 méq/g, de préférence y allant de 2 à 39 et x + z allant de 1 à 6 (de telles polyéther diamines sont commercialisées par exemple sous la dénomination JEFFAMINES HK-511, ED-600, ED-900 et ED-2003 par la société HUNTSMAN et présentent des alcalinités primaires respectives de 9,1, 3,3, 2,2 et 1,0 méq/g) ;
   - les polyétherdiamines répondant à la formule suivante :

      H₂N-X_{b}(-O-X_{b})ₘ₋₁-O-(CH₂-CH₂-CH₂-CH₂-O)ₙ-(X_{b}-O)ₘ₋₁-X_{b}-N H₂

      dans laquelle X_{b} est un groupe alkylène linéaire ou ramifié, comprenant de préférence de 2 à 20 atomes de carbone, de préférence de 2 à 10 atomes de carbone, m est un entier allant de 1 à 20, et n est un entier allant de 1 à 100, m et n étant de préférence tel que l'alcalinité primaire des polyétherdiamines est strictement inférieure à 10 méq/g.

Selon un autre mode de réalisation, la diamine primaire est choisie parmi les amines grasses dimères comportant deux groupes amines primaire d'alcalinité primaire allant de 3,28 méq/g à 5,20 méq/g. Ces amines grasses dimères peuvent être obtenues à partir d'acides gras dimérisés correspondants. A titre d'exemple de telles amines grasses dimères partiellement ou totalement hydrogénées, on peut citer celles répondant aux formules suivantes :

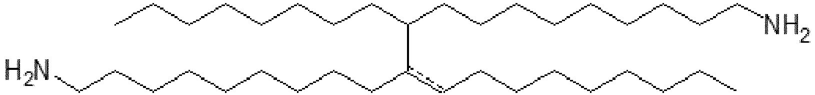

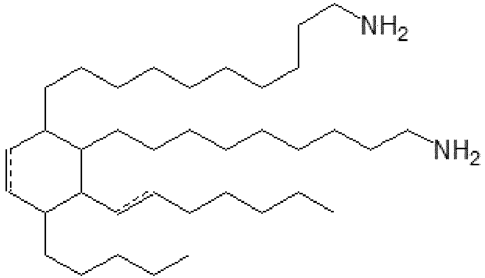

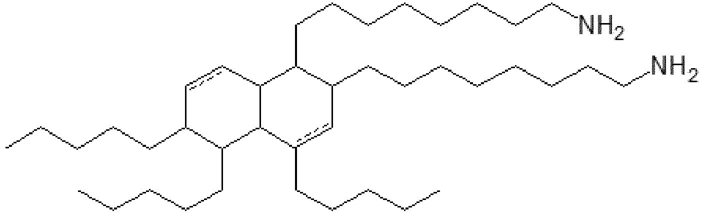

Les acides gras dimères utilisés pour préparer les amines grasses sus-citées peuvent être obtenus par polymérisation à haute température et sous pression d'acides gras insaturés monocarboxyliques (acide monomère), comprenant de 6 à 22 atomes de carbone, de préférence de 12 à 20 atomes de carbone, et proviennent de sources végétales ou animales. On peut citer comme exemple de tels acides gras insaturés, les acides en C₁₈ ayant une ou deux doubles liaisons (respectivement l'acide oléïque ou linoléïque) obtenus à partir de tallöl qui est un sous-produit de la fabrication de la pâte à papier. Après polymérisation de ces acides gras insaturés, on obtient notamment un mélange technique contenant en moyenne 30-35 % en poids d'acides gras monocarboxyliques souvent isomérisés par rapport aux acides gras insaturés monocarboxyliques de départ, 60-65 % en poids d'acides dicarboxyliques (acides dimères) comprenant le double du nombre de carbone par rapport aux acides gras insaturés monocarboxyliques de départ et 5-10 % en poids d'acides tricarboxyliques (acides trimères) ayant le triple du nombre de carbone par rapport aux acides gras insaturés monocarboxyliques de départ. Par purification de ce mélange, on obtient notamment les différents grades commerciaux d'acides dimères, monomères ou trimères. Ces acides gras dimères et trimères sont ensuite typiquement soumis à une réaction d'ammoniation réductrice (NH₃/H₂) en présence d'un catalyseur, permettant d'obtenir les amines grasses dimérisées.

Selon un autre mode de réalisation, la diamine primaire est choisie parmi les polyamines, de préférence ayant une masse molaire allant de 117 à 400 g/mol.

On peut par exemple citer la N-méthyl-2,2'-diaminodiéthylamine (CAS Number : 4097-88-5), la ,N-bis(3-aminopropyl)methylamine (CAS Number : 105-83-9) commercialisées par BASF, la N,N-Bis(3-aminopropyl)dodecylamine (CAS Number : 2372-82-9) disponible chez LONZA et GLOBAL AMINES, la N,N-Bis(3-aminopropyl)octadecylamine (CAS Number : 273925-74-9).

Les dérivés de diaminoacides peuvent avoir la formule (III) suivante : 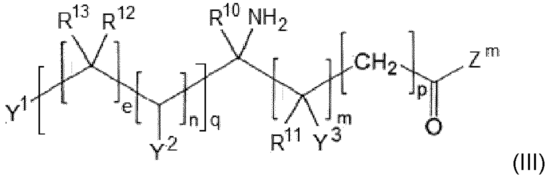 dans laquelle :
- Y¹ représente F¹ ou -NH₂;
- Y² représente F² ou -NH₂;
- Y³ représente F³ ou -NH₂;
   à condition qu'au moins un des radicaux Y¹, Y² ou Y³ représente -NH₂ ;
   à condition que quand Y¹ = -NH₂ alors q = 1 ;
   à condition que quand Y¹ = -NH₂, alors Y² = F² et Y³ = F³ ;
   à condition que quand Y² = -NH₂, alors Y¹ = F¹ et Y³ = F³ ;
   à condition que quand Y³ = -NH₂, alors Y¹ = F¹ et Y² = F² ;
- F¹ représente un radical choisi parmi un atome d'hydrogène, un groupe alkyle linéaire ou ramifié comprenant de 1 à 20 atomes de carbone, un groupe arylalkyle comprenant de 7 à 20 atomes de carbone, un groupe (hétéro)aryle comprenant de 4 à 12 atomes de carbone, ou un groupe (hétéro)cycloalkyle comprenant de 3 à 20 atomes de carbone, un groupe -COOH, un groupe -C(O)NH₂, un groupe -SMe, ou un groupe guanidyl de formule -NH-C(=NH)-NH₂,
- F² représente un radical choisi parmi un atome d'hydrogène, un groupe alkyle linéaire ou ramifié comprenant de 1 à 20 atomes de carbone, un groupe arylalkyle comprenant de 7 à 20 atomes de carbone, un groupe (hétéro)aryle comprenant de 4 à 12 atomes de carbone, ou un groupe (hétéro)cycloalkyle comprenant de 3 à 20 atomes de carbone, un groupe -COOH, un groupe -C(O)NH₂, un groupe -SMe, ou un groupe guanidyl de formule -NH-C(=NH)-NH₂,
- F³ représente un radical choisi parmi un atome d'hydrogène, un groupe alkyle linéaire ou ramifié comprenant de 1 à 20 atomes de carbone, un groupe arylalkyle comprenant de 7 à 20 atomes de carbone, un groupe (hétéro)aryle comprenant de 4 à 12 atomes de carbone, ou un groupe (hétéro)cycloalkyle comprenant de 3 à 20 atomes de carbone, un groupe -COOH, un groupe -C(O)NH₂, un groupe -SMe, ou un groupe guanidyl de formule -NH-C(=NH)-NH₂,
- R¹⁰, R¹¹, R¹² et R¹³ représente chacun, indépendamment les uns des autres, un radical choisi parmi un atome d'hydrogène, un groupe alkyle linéaire ou ramifié, comprenant de 1 à 20 atomes de carbone, ledit groupe alkyle comprenant éventuellement un ou plusieurs hétéroatomes, un groupe (hétéro)cycloalkyle comprenant de 3 à 20 atomes de carbone, un groupe arylalkyle comprenant de 7 à 20 atomes de carbone ou un groupe (hétéro)aryle comprenant de 5 à 12 atomes de carbone ;
- Z^{m} représente un radical organique monovalent ayant une masse molaire ou une masse moléculaire moyenne en nombre (Mn) allant de 16 à 22 000 g/mol, de préférence de 16 à 12 000 g/mol, de préférence encore de 16 à 8 000 g/mol, encore plus préférentiellement de 16 à 4 000 g/mol ;
- n est un nombre entier allant de 0 à 28 ;
- m représente 0 ou 1 ;
- p est un nombre entier allant de 0 à 10 ;
- q représente 0 ou 1 ;
- e est un nombre entier allant de 1 à 3.

De préférence, dans la formule (III), Z^{m} représente un radical choisi parmi -OR⁵, - NH₂, -NH-R' ou -N(R')(R") dans lesquels :
- R⁵ représente un groupe alkyle linéaire ou ramifié comprenant de 1 à 60 atomes de carbone pouvant éventuellement comprendre un ou plusieurs hétéroatomes, un groupe (hétéro)cycloalkyle comprenant de 3 à 20 atomes de carbone, un groupe arylalkyle comprenant de 7 à 20 atomes de carbone, ou un groupe (hétéro)aryle comprenant de 4 à 12 atomes de carbone;
- R' représente un groupe alkyle linéaire ou ramifié comprenant de 1 à 60 atomes de carbone pouvant éventuellement comprendre un ou plusieurs hétéroatomes, un groupe arylalkyle comprenant de 7 à 20 atomes de carbone, un groupe (hétéro)aryle comprenant de 4 à 12 atomes de carbone, ou un groupe (hétéro)cycloalkyle comprenant de 3 à 20 atomes de carbone ;
- R" représente un groupe alkyle linéaire ou ramifié, comprenant de 1 à 60 atomes de carbone pouvant éventuellement comprendre un ou plusieurs hétéroatomes, un groupe arylalkyle comprenant de 7 à 20 atomes de carbone, un groupe (hétéro)aryle comprenant de 4 à 12 atomes de carbone, ou un groupe (hétéro)cycloalkyle comprenant de 3 à 20 atomes de carbone.
R' er R" pouvant former un cycle aliphatique comprenant de 4 à 12 atomes de carbone, ledit cycle comprenant éventuellement un ou plusieurs hétéroatomes.

Les dérivés de diaminoacides formule (III) peuvent répondre à la formule (III-A) suivante : 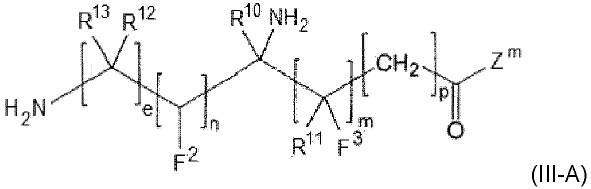 dans laquelle R¹⁰, R¹¹, R¹² et R¹³, F², F³, n, m, p et e sont tels que définis précédemment dans la formule (III).

Les composés de formule (III-A) peuvent se présenter sous la forme d'un énantiomère L, d'un énantiomère D ou sous la forme d'un racémique.

Parmi les composés de formule (III-A), on peut par exemple citer la lysine et l'homolysine.

Les composés de formule (III) peuvent être ceux répondant à la formule (III-B) suivante : 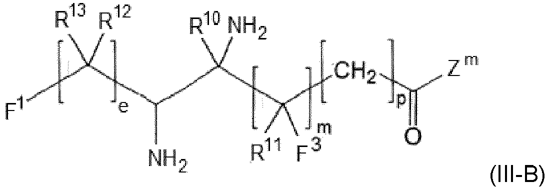 dans laquelle R¹⁰, R¹¹, R¹² et R¹³, F¹, F³, m, p et e, tels que définis précédemment dans la formule (II).

Les composés de formule (III-B) peuvent se présenter sous la forme d'un énantiomère L, d'un énantiomère D ou sous la forme d'un racémique.

Parmi les composés de formule (III-B), on peut par exemple citer la 3-aminonorvaline (CAS : 80573-35-9), l'acide α,β-diaminobenzenebutanoique (CAS : 70984-76-8) et l'acide 2,3-diaminobutanoique (CAS : 2643-66-5).

Les composés de formule (III) peuvent également répondre à la formule (III-C) suivante : 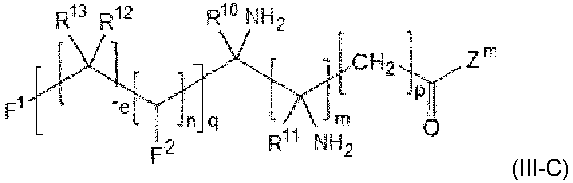 dans laquelle R¹⁰, R¹¹, R¹² et R¹³ F¹, F², n, p, q et e, sont tels que définis précédemment dans la formule (II).

Les composés de formule (III-C) peuvent se présenter sous la forme d'un énantiomère L, d'un énantiomère D ou sous la forme d'un racémique.

Parmi les composés de formule (III-C), on peut par exemple citer l'acide 2,3-diaminopropionique (CAS : 515-94-6), l'acide 3,4-diaminobutanoique (CAS : 131530-16-0) et la β-aminophenylalanine (CAS : 64765-83-9).

De préférence, les diamines primaires sont choisies parmi les polyétheramines, les amines grasses dimères, et leurs mélanges.

### Monoamine primaire c)

Dans le cadre de l'invention et sauf mention contraire, on entend par « monoamine primaire », une amine comprenant au sein de sa structure une seule fonction amine primaire -NH₂.

Les masses molaires ou masses moléculaires en nombre (Mn) peuvent aller de 95 g/mol à 2 000 g/mol, de préférence de 180 g/mol à 2 000 g/mol, et plus préférentiellement de 500 à 2 000 g/mol.

Les monoamines primaires c) peuvent être choisies dans le groupe constitué de la 2-ethyl-1-hexylamine (CAS : 104-75-6), la 1-aminoheptane (CAS : 1-Aminoheptane), 2-aminoheptane (CAS : 123-82-0), la 2-amino-6-methylheptane (CAS : 543-82-8), la benzylamine (CAS : 100-46-9), la furfurylamine (CAS : 617-89-0), le 1-aminooctane (CAS : 111-86-4), la 2-aminooctane (CAS: 693-16-3), 1-aminononane (CAS: 112-20-9), la 1-aminodecane (CAS : 2016-57-1), la 1-aminoundecane (CAS : 7307-55-3), la 1-aminododecane (CAS : 124-22-1), la 1-aminotridecane (CAS : 2869-34-3), la 1aminotetradecane (CAS: 2016-42-4), la 1-aminopentadecane (CAS: 2570-26-5), la 1-aminohexadecane (CAS : 143-27-1), la 1-aminooctadecane (CAS : 124-30-1), la 1-aminoeicosane (CAS : 10525-37-8), les amines grasses primaires de coprah (CAS : 61788-46-3) comme par exemple les NORAM^{®} C de la société ARKEMA, les amines grasses primaires de suif (CAS : 161544-60-1) comme par exemple les NORAM^{®} S de la société ARKEMA, les amines grasses primaires oléique (CAS : 112-90-3) comme par exemple les NORAM^{®} O de la société ARKEMA, les polyétheramines monoamine comme par exemple les JEFFAMINES M de HUNTSMAN ; et leurs mélanges.

### Monoaldéhyde c)

Dans le cadre de l'invention et sauf mention contraire, on entend par « monoaldéhyde », un aldéhyde comprenant au sein de sa structure une seule fonction aldéhyde -CHO.

Le monoaldéhyde peut avoir la formule (IV) suivante : 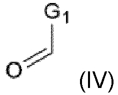 dans laquelle G¹ représente un radical hydrocarboné monovalent, linéaire ou ramifié, saturé ou insaturé, comprenant de 2 à 65 atomes de carbone, ledit radical pouvant éventuellement comprendre un ou plusieurs hétéroatomes.

Dans le cadre de l'invention, l'expression « radical hydrocarboné pouvant contenir des hétéroatomes » signifie que le radical peut contenir un hétéroatome soit sous la forme d'une fonction telle que par exemple une fonction carbonyle -C(=O), une fonction amide - C(=O)-NH₂- ou ester -C(=O)-O- / -O-C(=O)-, ou encore -O-C(=O)-NH-, -OR ou -NRR', ou alors sous forme d'un hétéroatome tel que par exemple -O-, -NH- ou -S-.

Le radical G¹ peut représenter un radical -C(R⁶)(R⁷)(R⁸) ou un radical G² avec :
- R⁶ et R⁷ représentant chacun, indépendamment l'un de l'autre, un radical hydrocarboné monovalent comprenant de 1 à 12 atomes de carbone, ledit radical étant éventuellement substitué par un groupe -OH ;
   ou R⁶ et R⁷ forment ensemble un cycle aliphatique comprenant de 4 à 12 atomes de carbone, ledit cycle étant éventuellement substitué ;
- R⁸ représente un radical hydrocarboné monovalent comprenant de 1 à 60 atomes de carbone, ledit radical comprenant éventuellement un hétéroatome ;
- G² représente un radical hétéroaryle éventuellement substitué, ou un radical -C(O)-R¹² avec R¹² représentant un radical alcoxy, un radical alkényle, ou un radical arylalkényle comprenant au moins 6 atomes de carbone,
ledit radical G² ayant une masse molaire ou une masse moléculaire moyenne en nombre (Mn) allant de 15 à 4 000 g/mol, de préférence allant de 60 à 2 000 g/mol, préférentiellement allant de 60 à 1 000 g/mol et encore plus préférentiellement allant de 60 à 500 g/mol.

Les composés de formule (IV) peuvent avoir l'une des formules (IV-A) ou (IV-B) suivantes : 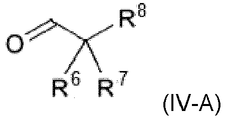 dans laquelle :
- R⁶ et R⁷ représente chacun, indépendamment l'un de l'autre, un radical hydrocarboné monovalent comprenant de 1 à 12 atomes de carbone, ledit radical étant éventuellement substitué par un groupe -OH ;
   ou R⁶ et R⁷ forment ensemble un cycle aliphatique comprenant de 4 à 12 atomes de carbone, ledit cycle étant éventuellement substitué ;
- R⁸ représente un radical hydrocarboné monovalent comprenant de 1 à 60 atomes de carbone, ledit radical comprenant éventuellement un hétéroatome ; 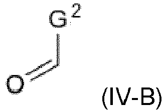 dans laquelle G² représente un radical hétéroaryle éventuellement substitué, ou un radical -C(O)-R¹² avec R¹² représentant un radical alcoxy, un radical alkényle, ou un radical arylalkényle comprenant au moins 6 atomes de carbone,
ledit radical G² ayant une masse molaire ou une masse moléculaire moyenne en nombre (Mn) allant de 15 à 4 000 g/mol, de préférence allant de 60 à 2 000 g/mol, préférentiellement allant de 60 à 1 000 g/mol et encore plus préférentiellement allant de 60 à 500 g/mol.

Selon un mode de réalisation, G² représente un radical hétéroaryle substitué par au moins un radical choisi parmi -OR²⁵, O-C(=O)-NHR²³, -O-C(=O)R²⁴, -CH₂-OR²⁰, -CH₂-O-C(=O)-R²¹, -COOR¹⁷, -C(=O)-NR¹⁴R¹⁵ et -CH₂-O-C(=O)-NHR²², avec R²⁵, R²⁰, R²¹, R²², R²³ et R²⁴ représentant indépendamment les uns des autres un groupe alkyle linéaire ou ramifié, cyclique ou non, saturé ou insaturé, un atome d'hydrogène, ou un groupe aryle ; R¹⁷ représentant un radical alkyle linéaire ou ramifié ou un radical (hétéro)aryle, ou un radical arylalkyle ; R¹⁴ et R¹⁵ représentant chacun, indépendamment l'un de l'autre, un hydrogène, un radical alkyle linéaire ou ramifié, un radical cycloalkyle, ou un radical arylalkyle ou R¹⁴ et R¹⁵ forment ensemble un cycle aliphatique comprenant de 4 à 12 atomes de carbone, ledit cycle étant éventuellement substitué et comprenant éventuellement un ou plusieurs hétéroatomes.

De préférence, les composés de formule (IV-A) sont ceux pour lesquels :
- R⁶ et R⁷ représente chacun, indépendamment l'un de l'autre, un radical alkyle linéaire ou ramifié comprenant de 1 à 12 atomes de carbone, ledit radical étant éventuellement substitué par un groupe -OH ; et/ou
- R⁸ représente l'un des radicaux suivants :
   - un radical -CH₂-W dans lequel W représente un groupe aryle éventuellement substitué ou un hétérocycloalkyle éventuellement substitué, ou
   - un radical -CH(R⁹)-O-R¹⁰ dans lequel R⁹ représente un hydrogène, un radical alkyle linéaire ou ramifié, un radical cycloalkyle, un radical arylalkyle, ou un radical alcoxycarbonyle comprenant de 1 à 12 atomes de carbone ; et R¹⁰ représente un hydrogène ou un radical hydrocarboné comprenant de 1 à 30 atomes de carbone, ledit radical comprenant éventuellement un ou plusieurs atomes d'oxygène ; ou
   - un radical -CH(R⁹)-O-C(O)-R¹¹ dans lequel R⁹ représente un hydrogène, un radical alkyle linéaire ou ramifié, un radical cycloalkyle, un radical arylalkyle, ou un radical alcoxycarbonyle comprenant de 1 à 12 atomes de carbone ; et R¹¹ représente un hydrogène, ou un radical alkyle linéaire ou ramifié comprenant de 1 à 30 atomes de carbone, ledit radical alkyle comprenant éventuellement des portions cycliques et éventuellement au moins un hétéroatome ; ou
   - un radical -CH(R¹³)-NR¹⁴R¹⁵ dans lequel R¹³ représente un hydrogène, un radical alkyle linéaire ou ramifié, un radical cycloalkyle, un radical arylalkyle, ou un radical alcoxycarbonyle comprenant de 1 à 12 atomes de carbone ; et R¹⁴ et R¹⁵ représentent indépendamment l'un de l'autre un hydrogène, un radical alkyle linéaire ou ramifié, un radical cycloalkyle, ou un radical arylalkyle ;
      ou R¹⁴ et R¹⁵ forment ensemble un cycle aliphatique comprenant de 4 à 12 atomes de carbone, ledit cycle étant éventuellement substitué et comprenant éventuellement un ou plusieurs hétéroatomes ; ou
   - un radical -CH(R⁹)-O-C(O)-NHR¹⁶ dans lequel R⁹ représente un hydrogène, un radical alkyle linéaire ou ramifié, un radical cycloalkyle, un radical arylalkyle, ou un radical alcoxycarbonyle comprenant de 1 à 12 atomes de carbone ; et R¹⁶ représente un hydrogène, ou un radical alkyle linéaire ou ramifié comprenant de 1 à 30 atomes de carbone; ou
   - un radical -C(=O)-O-R¹⁷ avec R¹⁷ représentant un radical alkyle linéaire ou ramifié ou un radical (hétéro)aryle, ou un radical arylalkyle ; ou
   - un radical -C(=O)-N(R¹⁸)(R¹⁹) avec R¹⁸ et R¹⁹ représentant chacun, indépendamment l'un de l'autre, un hydrogène, un radical alkyle linéaire ou ramifié, un radical cycloalkyle, ou un radical arylalkyle ou R¹⁸ et R¹⁹ forment ensemble un cycle aliphatique comprenant de 4 à 12 atomes de carbone, ledit cycle étant éventuellement substitué et comprenant éventuellement un ou plusieurs hétéroatomes.

De préférence, les composés de formule (IV-B) sont ceux pour lesquels G² représente un radical (hétéro)aryle comprenant de 5 à 12 atomes de carbone, de préférence substitué par au moins deux groupes alkyles ou par au moins un groupe -CH₂OH ou par au moins un groupe -OH.

Les composés de formule (IV-A) ont de préférence l'une des formules (IV-A-1), (IV-A-2), (IV-A-3), (IV-A-4) ou (IV-A-5) suivantes : 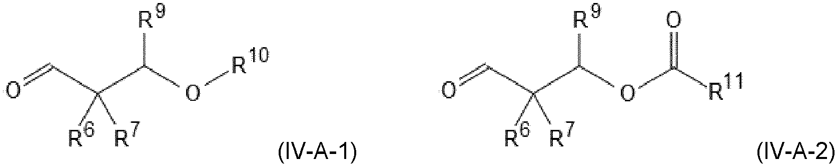 ou 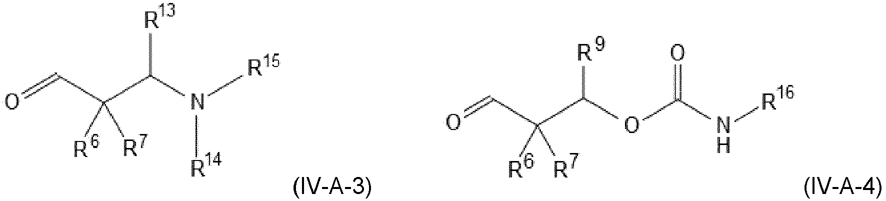 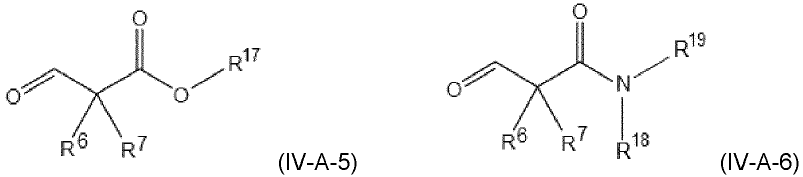 dans lesquelles :
- R⁶ et R⁷ représente chacun, indépendamment l'un de l'autre, un radical hydrocarboné monovalent comprenant de 1 à 12 atomes de carbone, ledit radical étant éventuellement substitué par un groupe -OH ;
   ou R⁶ et R⁷ forment ensemble un cycle aliphatique comprenant de 4 à 12 atomes de carbone, ledit cycle étant éventuellement substitué ;
- R⁹ représente un hydrogène, un radical alkyle linéaire ou ramifié, un radical cycloalkyle, un radical arylalkyle, ou un radical alcoxycarbonyle comprenant de 1 à 12 atomes de carbone ;
- R¹⁰ représente un hydrogène ou un radical hydrocarboné comprenant de 1 à 30 atomes de carbone, ledit radical comprenant éventuellement un ou plusieurs atomes d'oxygène ;
- R¹¹ représente un hydrogène, ou un radical alkyle linéaire ou ramifié comprenant de 1 à 30 atomes de carbone, ledit radical alkyle comprenant éventuellement des portions cycliques et éventuellement au moins un hétéroatome ;
- R¹³ représente un hydrogène, un radical alkyle linéaire ou ramifié, un radical cycloalkyle, un radical arylalkyle, ou un radical alcoxycarbonyle comprenant de 1 à 12 atomes de carbone ;
- R¹⁴ et R¹⁵ représente chacun, indépendamment l'un de l'autre, un hydrogène, un radical alkyle linéaire ou ramifié, un radical cycloalkyle, ou un radical arylalkyle ;
   ou R¹⁴ et R¹⁵ forment ensemble un cycle aliphatique comprenant de 4 à 12 atomes de carbone, ledit cycle étant éventuellement substitué et comprenant éventuellement un ou plusieurs hétéroatomes ;
- R¹⁶ représente un hydrogène, ou un radical alkyle linéaire ou ramifié comprenant de 1 à 30 atomes de carbone;
- R¹⁷ représentant un radical alkyle linéaire ou ramifié ou un radical (hétéro)aryle, ou un radical arylalkyle ;
- R¹⁸ et R¹⁹ représentant chacun, indépendamment l'un de l'autre, un hydrogène, un radical alkyle linéaire ou ramifié, un radical cycloalkyle, ou un radical arylalkyle ou R¹⁸ et R¹⁹ forment ensemble un cycle aliphatique comprenant de 4 à 12 atomes de carbone, ledit cycle étant éventuellement substitué et comprenant éventuellement un ou plusieurs hétéroatomes.

Parmi les aldéhydes de formule (IV-A), on peut citer par exemple, le pivalaldéhyde (= 2,2-diméthyl-propanal), le 2,2-diméthyl-butanal, le 2,2-diéthyl-butanal, le 1-méthyl-cyclopentanecarboxaldehyde, le 1-méthyl-cyclohexane-carboxaldehyde; les éthers dérivés du 2-hydroxy-2-méthylpropanal et des alcools tels que le propanol, l'isopropanol, le butanol et le 2-éthylhexanol; les esters dérivés de l'acide 2-formyl-2-méthylpropionique ou de l'acide 3-formyl-3-méthylbutyrique et des alcools tels que le propanol, l'isopropanol, le butanol et le 2-éthylhexanol; les esters dérivés du 2-hydroxy-2-méthylpropanal et d'acides carboxyliques tel que l'acide butyrique, l'acide isobutyrique, et l'acide 2-éthylhexanoique; ainsi que les éthers et esters dérivés du 3-hydroxypropanal disubstitué en position 2,2, les hydroxybutanals ou les aldéhydes homologues supérieurs, comme par exemple le 2,2-diméthyl-3-hydroxypropanal comme décrit ci-après.

Les aldéhydes de formule (IV-A-1) représentent notamment des éthers aliphatiques, cycloaliphatiques ou arylaliphatiques obtenus à partir de 3-hydroxyaldéhydes substitués en position 2,2 et d'alcools, comme par exemple avec des alcools gras, ou de phénols de formule R¹⁰-OH.

Les 3-hydroxyaldéhydes substitués en position 2,2 peuvent être obtenus via une réaction croisée entre des aldéhydes aliphatiques primaires ou secondaire, comme par exemple le formaldéhyde, et des aldéhydes aliphatiques, cycloaliphatiques ou arylaliphatiques secondaires, comme par exemple, l'isobutyraldehyde, le 2-méthylbutyraldéhyde, le 2-éthylbutyraldéhyde, le 2-méthylvaleraldéhyde, le 2-éthylcaproaldéhyde, le cyclopentanecarboxaldéhyde, le cyclohexanecarboxaldéhyde, le 1,2,3,6-tétrahydrobenzaldéhyde, le 2-méthyl-3-phénylpropionaldéhyde, le 2-phénylpropionaldéhyde (hydratropaldéhyde) ou le diphénylacetaldéhyde. Parmi les exemples de 3-hydroxyaldéhydes substitués en position 2,2, on peut citer le 2,2-diméthyl-3-hydroxypropanal, le 2-hydroxyméthyl-2-méthyl-butanal, le 2-hydroxyméthyl-2-éthyl-butanal, le 2-hydroxyméthyl-2-méthyl-pentanal, le 2-hydroxyméthyl-2-éthyl-hexanal, le 1-hydroxyméthyl-cyclopentanecarboxaldéhyde, le 1-hydroxyméthyl-cyclohexanecarboxaldéhyde, le 1-hydroxyméthyl-cyclohex-3-ènecarboxaldehyde, le 2-hydroxyméthyl-2-méthyl-3-phényl-propanal, le 3-hydroxy-2-méthyl-2-phénylpropanal et le 3-hydroxy-2,2-diphényl-propanal.

Les aldéhydes de formule (IV-A-1) particulièrement préférés sont le 2,2-diméthyl-3-phénoxy-propanal, le 3-cyclohexyloxy-2,2-diméthyl-propanal, le 2,2-diméthyl-3-(2-éthyl-hexyloxy)-propanal, le 2,2-diméthyl-3-lauroxy-propanal, le 2,2-diméthyl-3-stéaroxy-propanal et le 3-hydroxy-2,2-diméthyl-propanal, le 3-hydroxy-2-(hydroxyméthyl)-2-méthylpropionaldéhyde.

Selon un mode de réalisation, les composés de formule (IV-A-1) sont ceux pour lesquels :
- R⁶ et R⁷ représente chacun, indépendamment l'un de l'autre, un radical alkyle linéaire ou ramifié comprenant de 1 à 12 atomes de carbone, ledit radical étant éventuellement substitué par un groupe -OH ;
- R⁹ représente un hydrogène ;
- R¹⁰ représente un hydrogène.

Les aldéhydes de formule (IV-A-2) représentent notamment des esters de 3-hydroxyaldéhydes substitués en position 2,2, comme par exemple le 2,2-diméthyl-3-hydroxypropanal, le 2-hydroxyméthyl- 2-méthyl-butanal, le 2-hydroxyméthyl-2-éthylbutanal, le 2-hydroxyméthyl-2-méthyl-pentanal, le 2-hydroxyméthyl-2-éthyl-hexanal, le 1-hydroxyméthylcyclopentanecarboxaldéhyde, le 1-hydroxyméthylcyclohexanecarboxaldéhyde, le 1-hydroxyméthyl-cyclohex-3-ènecarboxaldéhyde, le 2-hydroxyméthyl-2-méthyl-3-phénylpropanal, le 3-hydroxy-2-méthyl-2-phényl-propanal et le 3-hydroxy-2,2-diphényl-propanal, avec des acides carboxyliques.

Les acides carboxyliques utilisables pour cette réaction sont par exemple des acides carboxyliques aliphatiques saturés tel que l'acide formique, l'acide acétique, l'acide propionique, l'acide butyrique, l'acide isobutyrique, l'acide valérique, l'acide caproique, l'acide 2-éthyl-caproique, l'acide énanthique, l'acide caprylique, l'acide pélargonique, l'acide caprique, l'acide undécanoique, l'acide laurique, l'acide tridécanoique, l'acide myristique, l'acide pentadecanoique, l'acide palmitique, l'acide margarique, l'acide stéarique, l'acide nonadécanoique, l'acide arachidique; les acides carboxyliques aliphatiques insaturés tel que l'acide palmitoléique, l'acide oléique, l'acide érucique; les acides carboxyliques aliphatiques polyinsaturés tel que l'acide linoléique, l'acide linolénique, l'acide éléostéarique, l'acide arachidonique; les acides carboxyliques cycloaliphatiques tels que les acides acides cyclohexanecarboxyliques; les acides arylaliphatiques tel que l'acide phénylacétique; les acides carboxyliques aromatiques tel que l'acide benzoique, l'acide naphthoique, l'acide toluoylique, l'acide anisique; les isomères de ces acides; les mélanges d'acides gras issus de la saponification des graisses et des huiles naturelles telle l'huile de colza, l'huile de tournesol, l'huile de lin, l'huile d'olive, l'huile de coprah, l'huile de palmiste, et l'huile de palme; ainsi que les acides dicarboxyliques monoalkyl et monoaryl esters, obtenus par simple estérification des acides diacides carboxyliques tel que l'acide succinique, l'acide glutarique, l'acide adipique adipique, l'acide pimélique, l'acide subérique, l'acide azélaique, l'acide sébacique, l'acide 1,12-dodecanedioique, l'acide maléique, l'acide fumarique, l'acide hexahydrophthalique, l'acide hexahydroisophthalique, l'acide hexahydrotéréphthalique, l'acide 3,6,9-trioxaundécanedioique et les dérivés similaires sur base polyéthylène glycol, avec les alcools tel que le méthanol, l'éthanol, le propanol, le butanol, les homologues supérieur et les isomères de ces alcools.

Parmi les aldéhydes de formule (IV-A-2), on peut par exemple citer le 2,2-diméthyl-oxopropylacétate, ou le 2,2-diméthyl-3-oxopropyl dodécanoate.

Selon un mode de réalisation, les composés de formule (IV-A-2) sont ceux pour lesquels :
- R⁶ et R⁷ représente chacun, indépendamment l'un de l'autre, un radical alkyle linéaire ou ramifié comprenant de 1 à 12 atomes de carbone, ledit radical étant éventuellement substitué par un groupe -OH ;
- R⁹ représente un hydrogène ;
- R¹¹ représente un hydrogène, ou un radical alkyle linéaire ou ramifié comprenant de 1 à 30 atomes de carbone, préférentiellement de 1 à 11 atomes de carbone.

Selon un mode de réalisation, les composés de formule (IV-A-3) sont ceux pour lesquels :
- R⁶ et R⁷ représente chacun, indépendamment l'un de l'autre, un radical alkyle linéaire ou ramifié comprenant de 1 à 12 atomes de carbone;
- R¹³ représente un hydrogène ;
- R¹⁴ et R¹⁵ forment ensemble un cycle aliphatique comprenant de 4 à 12 atomes de carbone, ledit cycle comprenant un hétéroatome.

Parmi les aldéhydes de formule (IV-A-3), on peut par exemple citer le 2,2-diméthyl-3-(morpholin-4-yl)propanal (CAS Number : 23588-51-4).

Parmi les aldéhydes de formule (IV-A-5), on peut par exemple citer les composés suivants: 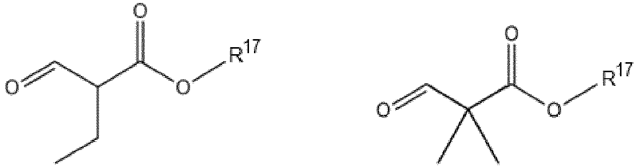 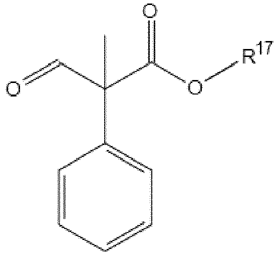 avec R¹⁷ étant tel que définis ci-dessus.

Parmi les aldéhydes de formule (IV-B), on peut par exemple citer les aldéhydes de formules (IV-B-1), (IV-B-2), (IV-B-3), (IV-B-4), (IV-B-5), (IV-B-6), (IV-B-7) ou (IV-B-8) suivantes : 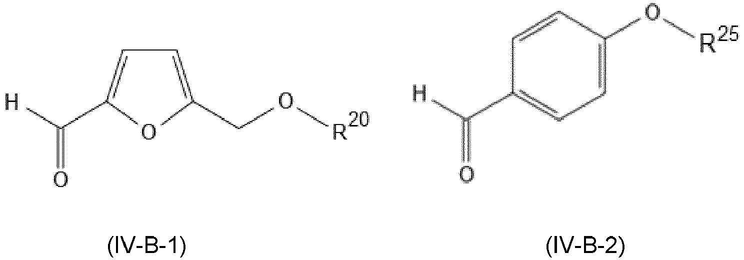 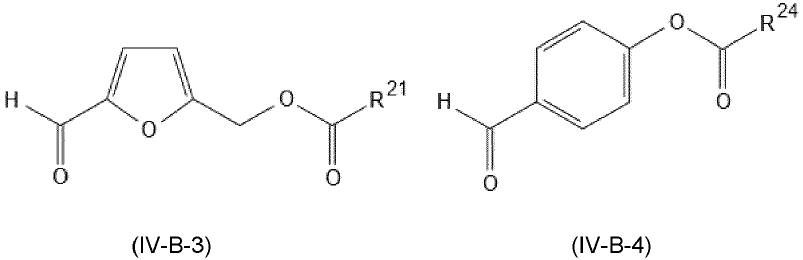 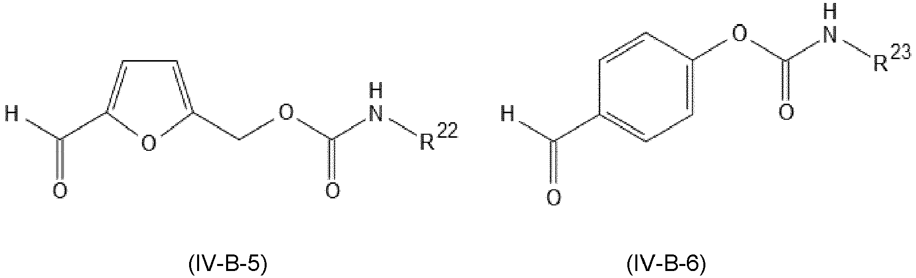 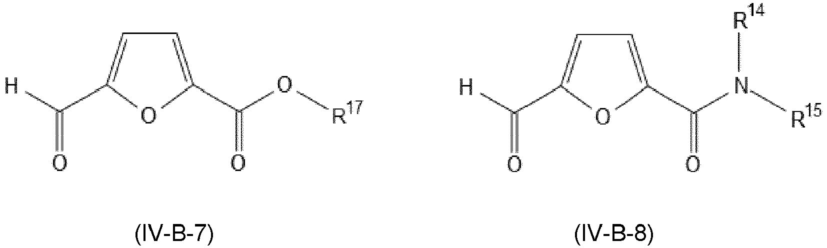 dans lesquelles R¹⁷, R¹⁴, R¹⁵, R²⁵, R²⁰, R²¹, R²², R²³, et R²⁴ sont tels que définis précédemment.

Parmi les aldéhyde de formule (IV-B), on peut par exemple citer les 2- et 3- et 4-formylpyridine, le 2-furfuraldéhyde, le 2-thiophènecarbaldéhyde, le quinoline-2-carbaldéhyde et ces isomères de position en 3-, 4-, 5-, 6-, 7- et 8-, ; ainsi que le glyoxal, les acide-esters glyoxaliques tel que l'ester méthylique de l'acide glyoxalique, le cinnamaldéhyde, et les cinnamaldéhydes substitués ; et le diméthylcyclohex-3-ène-1-carbaldéhyde.

Selon un mode de réalisation, les aldéhydes de formule (III) sont choisis dans le groupe constitué du 2,2-diméthyl-3-phenoxypropanal, du 2,2-diméthyl-3-cyclohexyloxypropanal, du 2,2-diméthyl-3-(2-éthylhexyloxy)propanal, du 2,2-diméthyl-3-lauryloxypropanal, du 2,2-diméthyl-3-stearyloxypropanal, du 2,2-diméthyl-3-(morpholin-4-yl)propanal, du 2,2-diméthyl-3-oxopropylacétate, du 2,2-diméthyl-3-oxopropyl dodécanoate, du 2,2-diméthyl-3(m-phenyl)propanal, du 2,2-diméthyl-3(m-tolyl)propanal ou Majantal, du diméthylcyclohex-3-ène-1-carbaldéhyde, du 3-hydroxy-2-(hydroxyméthyl)-2-méthylpropionaldéhyde, et de leurs mélanges.

De préférence, on utilise une monoamine c) ou monoaldéhyde c) lorsque le rapport molaire -CHO/-NH₂ dans le procédé de préparation de la polyimine A est différent de 1.

Selon un mode de réalisation, lorsque le rapport molaire -CHO/-NH₂ est strictement supérieur à 1, une monoamine c) est utilisée.

Selon un mode de réalisation, lorsque le rapport molaire -CHO/-NH₂ est strictement inférieur à 1, un monoaldéhyde c) est utilisé.

### Dihydroxyaldimine i)

Les dihydroxyaldimines peuvent être obtenues par réaction entre :
- au moins un aldéhyde-hydroxylé comprenant une seule fonction hydroxyle ; et
- au moins une diamine primaire.

L'aldéhyde-hydroxylé comprenant une seule fonction hydroxyle peut être choisi par exemple dans le groupe constitué du 5-(hydroxyméthyl)furfural (Numéro CAS : 67-47-0), du 4-hydroxybenzaldéhyde (numéro CAS : 123-08-0), du 7-hydroxy-3,7-diméthyloctanal (Numéro CAS : 107-75-5), du 9-hydroxy-5,9-diméthyldéc-4-énal (Numéro CAS : 926-50-1) et des 3-hydroxyaldéhydes substitués en position 2,2 tels que le 2,2-diméthyl-3-hydroxypropanal (numéro CA : 597-31-9), le 2-hydroxyméthyl-2-méthyl-butanal, le 2-hydroxyméthyl-2-éthyl-butanal, le 2-hydroxyméthyl-2-méthyl-pentanal, le 2-hydroxyméthyl-2-éthyl-hexanal, le 1-hydroxyméthyl-cyclopentanecarboxaldéhyde, le 1-hydroxyméthyl-cyclohexanecarboxaldéhyde, le 1-hydroxyméthyl-cyclohex-3-ènecarboxaldehyde, le 2-hydroxyméthyl-2-méthyl-3-phényl-propanal, le 3-hydroxy-2-méthyl-2-phénylpropanal, le 3-hydroxy-2,2-diphényl-propanal et leurs mélanges.

Les 3-hydroxyaldéhydes substitués en position 2,2 peuvent être obtenus via une réaction croisée entre des aldéhydes aliphatiques primaires ou secondaire, comme par exemple le formaldéhyde, et des aldéhydes aliphatiques, cycloaliphatiques ou arylaliphatiques secondaires, comme par exemple, l'isobutyraldehyde, le 2-méthylbutyraldéhyde, le 2-éthylbutyraldéhyde, le 2-méthylvaleraldéhyde, le 2-éthylcaproaldéhyde, le cyclopentanecarboxaldéhyde, le cyclohexanecarboxaldéhyde, le 1,2,3,6-tétrahydrobenzaldéhyde, le 2-méthyl-3-phénylpropionaldéhyde, le 2-phénylpropionaldéhyde (hydratropaldéhyde) ou le diphénylacetaldéhyde.

Selon un mode de réalisation, les aldéhydes-hydroxylés sont choisis dans le groupe constitué du 3-hydroxy-2,2-diméthyl-propanal (numéro CAS : 597-31-9), du 5-hydroxyméthylfurfural (Numéro CAS : 67-47-0), du 4-hydroxybenzaldéhyde (numéro CAS : 123-08-0), du 7-hydroxy-3,7-diméthyloctanal (Numéro CAS : 107-75-5), du 9-hydroxy-5,9-diméthyldéc-4-énal (numéro CAS : 926-50-1), et de leurs mélanges.

La diamine primaire est telle que précédemment décrite pour la diamine primaire b).

### Polyisocyanate D

Le polyisocyanate D est choisi parmi les isocyanates et les polyuréthanes comprenant au moins deux fonctions terminales NCO.

La description du polyisocyanate C mentionnée ci-dessus, ainsi que les modes de réalisation et modes préférés s'appliquent au polyisocyanate D.

### Monohydroxyaldimine iii)

La monohydroxyaldimines peut être obtenue par réaction entre :
- au moins un aldéhyde comprenant une seule fonction hydroxyle ; et
- au moins une monoamine primaire.

L'aldéhyde-hydroxylé comprenant une seule fonction hydroxyle peut être choisi par exemple dans le groupe constitué du 5-(hydroxyméthyl)furfural (Numéro CAS : 67-47-0), du 4-hydroxybenzaldéhyde (numéro CAS : 123-08-0), du 7-hydroxy-3,7-diméthyloctanal (Numéro CAS : 107-75-5), du 9-hydroxy-5,9-diméthyldéc-4-énal (Numéro CAS : 926-50-1) et des 3-hydroxyaldéhydes substitués en position 2,2 tels que le 2,2-diméthyl-3-hydroxypropanal, le 2-hydroxyméthyl-2-méthyl-butanal, le 2-hydroxyméthyl-2-éthyl-butanal, le 2-hydroxyméthyl-2-méthyl-pentanal, le 2-hydroxyméthyl-2-éthyl-hexanal, le 1-hydroxyméthyl-cyclopentanecarboxaldéhyde, le 1-hydroxyméthyl-cyclohexanecarboxaldéhyde, le 1-hydroxyméthyl-cyclohex-3-ènecarboxaldehyde, le 2-hydroxyméthyl-2-méthyl-3-phényl-propanal, le 3-hydroxy-2-méthyl-2-phénylpropanal, le 3-hydroxy-2,2-diphényl-propanal et leurs mélanges.

Les 3-hydroxyaldéhydes substitués en position 2,2 peuvent être obtenus via une réaction croisée entre des aldéhydes aliphatiques primaires ou secondaire, comme par exemple le formaldéhyde, et des aldéhydes aliphatiques, cycloaliphatiques ou arylaliphatiques secondaires, comme par exemple, l'isobutyraldehyde, le 2-méthylbutyraldéhyde, le 2-éthylbutyraldéhyde, le 2-méthylvaleraldéhyde, le 2-éthylcaproaldéhyde, le cyclopentanecarboxaldéhyde, le cyclohexanecarboxaldéhyde, le 1,2,3,6-tétrahydrobenzaldéhyde, le 2-méthyl-3-phénylpropionaldéhyde, le 2-phénylpropionaldéhyde (hydratropaldéhyde) ou le diphénylacetaldéhyde.

Selon un mode de réalisation, les aldéhydes-hydroxylés sont choisis dans le groupe constitué du 3-hydroxy-2,2-diméthyl-propanal (numéro CAS : 597-31-9), du 5-hydroxyméthylfurfural (Numéro CAS : 67-47-0), du 4-hydroxybenzaldéhyde (numéro CAS : 123-08-0), du 7-hydroxy-3,7-diméthyloctanal (Numéro CAS : 107-75-5), du 9-hydroxy-5,9-diméthyldéc-4-énal (numéro CAS : 926-50-1), et de leurs mélanges.

La monoamine primaire est telle que précédemment décrite pour les monoamines c).

### Monoisocyanate iii)

Le monoisocyanate iii) peut être choisi par exemple dans le groupe constitué du p-tolyl isocyanate, p-isopropylphenyl isocyanate, p-toluenesulfonyl isocyanate (numéro CAS : 4083-64-1), du 3-isocyanatopropyltriméthoxysilane, du 3-isocyanatopropyltriéthoxysilane, du 3-isocyanatopropylméthyldiméthoxysilane, du 3-isocyanatopropylméthyldiéthoxysilane, et des monisocyanates aliphatiques, Inéaires ou ramifiés, saturés ou insaturés tel que le 1-isocyanatododecane, le 1-isocyanatotetradecane, le 1-isocyanatohexadecane et le 1-isocyanatooctadecane.

### Composition de mastic

Dans la composition, le ratio molaire fonction aldimine -C=N- / fonction -NCO peut aller de 0,50 à 2,0, de préférence 0,50 à 1,5 et préférentiellement de 0,7 à 1,2.

Selon un mode de réalisation, la composition comprend en outre au moins un additif choisi parmi les plastifiants, les solvants, les pigments, les promoteurs d'adhérence, les absorbeurs d'humidité, les stabilisants UV (ou antioxydants), les tamis moléculaires, les paillettes, les matériaux fluorescents, les additifs rhéologiques, les charges, et leurs mélanges.

La charge peut être choisie parmi les charges organiques, les charges inorganiques et leurs mélanges.

A titre de charge(s) organique(s), on peut utiliser n'importe quelle(s) charge(s) organique(s) et notamment polymérique(s) typiquement utilisée(s) dans le domaine des compositions de mastic.

On peut utiliser par exemple du polychlorure de vinyle (PVC), des polyoléfines, du caoutchouc, de l'éthylène vinyl acétate (EVA), des fibres aramides telles que le KEVLAR ^{®}.

On peut utiliser également des microsphères creuses en polymère thermoplastique expansibles ou non expansibles. On peut notamment citer des microsphères creuses en chlorure de vinylidène/acrylonitrile.

La taille moyenne de particule de la (des) charge(s) utilisable(s) est de préférence inférieure ou égale à 10 microns, plus préférentiellement inférieure ou égale à 3 microns, afin d'éviter leur sédimentation dans la composition selon l'invention au cours de son stockage.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

A titre d'exemples de charge(s) minérale(s), on peut utiliser n'importe quelle(s) charge(s) minérale(s) typiquement utilisée(s) dans le domaine des compositions de revêtement de surface, de colle ou de mastic. Les charges inorganiques peuvent se présenter sous la forme de particules de géométrie diverse. Elles peuvent être par exemple sphériques, fibreuses, ou présenter une forme irrégulière.

Selon un mode de réalisation, la charge est choisie parmi le sable, les billes de verre, le verre, le quartz, la barite, l'alumine, le mica, le talc, les charges carbonatées, et leurs mélanges.

Le sable qui peut être utilisé dans la présente invention a de préférence une granulométrie allant de 0,1 à 400 µm, préférentiellement de 1 à 400 µm, de préférence encore de 10 à 350 µm, de préférence encore de 50 à 300 µm.

Les billes de verre qui peuvent être utilisées dans la présente invention ont de préférence une granulométrie allant de 0,1 à 400 µm, préférentiellement de 1 à 400 µm, de préférence encore de 10 à 350 µm, de préférence encore de 50 à 300 µm.

De préférence, la charge est une charge carbonatée choisie parmi les carbonates de métaux alcalins ou alcalino-terreux, tels que par exemple le carbonate de calcium.

Les charges peuvent être naturelles ou traitées, par exemple à l'aide d'un acide organique tel que l'acide stéarique, ou d'un mélange d'acides organiques constituées majoritairement d'acide stéarique.

La quantité totale de charge peut varier de 0,01 % à 70% en poids, de préférence de 20% à 65%, préférentiellement de 20% à 50%, avantageusement de 25% à 40% en poids par rapport au poids total de la composition.

La composition peut comprendre au moins un agent plastifiant à raison de 5% à 30% en poids, de préférence de 10% à 30% en poids, préférentiellement de 15% à 25% en poids par rapport au poids total de ladite composition.

A titre d'exemple d'agent plastifiant utilisable, on peut citer n'importe quel agent plastifiant habituellement utilisé dans le domaine des adhésifs, des mastics et/ou des revêtements de surface, tel que par exemples les phtalates, les benzoates, les esters de trimethylolpropane, les esters de triméthyloléthane, les esters de triméthylolméthane, les esters de glycérol, les esters de pentaerythritol, les huiles minérales napthéniques, les adipates, les cyclohexyldicarboxylates, les huiles paraffiniques, les huiles naturelles (éventuellement époxydées), les polypropylènes, les polybutylènes, les polyisoprènes hydrogénés, et leurs mélanges.

Parmi les phtalates, on peut par exemple citer le diisononyl phtalate, le di-isobutyl phtalate, le dioctyle phtalate, le dicyclohexyl phtalate, le diisooctyle phtalate, le diisododécyle phtalate, le dibenzyle phtalate, le diisodécy phtalate (par exemple commercialisé par BASF sous la dénomination PALATINOL ^{™} DIDP), ou le butylbenzyle phtalate.

Parmi les benzoates, on peut par exemple citer : le néopentylglycol dibenzoate (par exemple disponible sous la dénomination UNIPLEX ^{®} 512 auprès de LANXESS), le dipropylèneglycol dibenzoate (par exemple disponible sous la dénomination BENZOFLEX ^{®} 9-88SG auprès de EASTMAN), un mélange de diéthylène glycol dibenzoate et de dipropylène glycol dibenzoate (par exemple disponible sous la dénomination K-FLEX ^{®} 850 S auprès de KALAMA CHEMICAL), ou encore un mélange de diéthylène glycol dibenzoate, de dipropylène glycol dibenzoate et de triéthylène glycol dibenzoate (par exemple disponible sous la dénomination BENZOFLEX ^{®} 2088 auprès de EASTMAN).

Parmi les esters de pentaérythritol, on peut par exemple citer le tétravalérate de pentaérythritol (par exemple disponible sous la dénomination PEVALEN^{™} auprès de la société PERSTORP).

Parmi les cyclohexanedicarboxylates, on peut par exemple citer le diisononyl 1,2-cyclohexanedicarboxylate (par exemple disponible sous la dénomination HEXAMOLL DINCH ^{®} auprès de BASF).

A titre d'exemple d'agent(s) de rhéologie utilisable(s), on peut citer n'importe quel agent de rhéologie habituellement utilisé dans le domaine des compositions adhésives, de mastic et/ou de revêtement de surface.

De préférence, on utilise un ou plusieurs agents de rhéologie choisis parmi les agents thixotropiques, et plus préférentiellement parmi:
- les plastisols de PVC, correspondant à une suspension de PVC dans un agent plastifiant miscible avec le PVC, obtenue in situ par chauffage à des températures allant de 60°C à 80°C. Ces plastisols peuvent être ceux décrits notamment dans l'ouvrage « Polyurethane Sealants », Robert M. Evans, ISBN 087762-998-6,
- la silice pyrogénée,
- des dérivés d'urée issus de la réaction d'un monomère diisocyanate aromatique tel que le 4,4'-MDI avec une amine aliphatique telle que la butylamine comme par exemple le « Gelpaste Urea » (EC : 416-600-4). La préparation de tels dérivés d'urée est décrite notamment dans la demande FR 1 591 172.

La teneur totale en agent(s) de rhéologie(s) pouvant être utilisée peut varier de 1% à 40% en poids, de préférence de 5% à 30% en poids, plus préférentiellement de 10% à 25% en poids par rapport au poids total de la composition.

Le solvant est de préférence un solvant volatil à température à 23°C. Le solvant volatil peut par exemple être choisi parmi les alcools volatils à 23°C, tel que l'éthanol ou l'isopropanol. Le solvant volatil permet par exemple de diminuer la viscosité de la composition et de rendre la composition plus facile à appliquer. Le caractère volatil du solvant permet notamment au joint, obtenu après durcissement de la composition, de ne plus contenir de solvant. Ainsi, le solvant n'a par exemple pas d'influence négative sur la dureté du joint.

Lorsqu'un solvant, en particulier un solvant volatil, est présent dans la composition, sa teneur est de préférence inférieure ou égale à 5% en poids, de préférence encore inférieure ou égale à 3% en poids, par rapport au poids total de la composition.

De préférence, la teneur en solvant(s) dans la composition est comprise entre 0% et 5% en poids.

Les pigments peuvent être des pigments organiques ou inorganiques.

Par exemple, le pigment est TiO₂, en particulier le KRONOS^{®} 2059 commercialisé par la société KRONOS.

La composition peut comprendre une quantité de 0,1% à 3%, de préférence de 0,1% à 3%, encore plus préférentiellement de 0,1% à 1% en poids, d'au moins un stabilisant UV ou antioxydant. Ces composés sont typiquement introduits pour protéger la composition d'une dégradation résultant d'une réaction avec de l'oxygène qui est susceptible de se former par action de la chaleur ou de la lumière. Ces composés peuvent inclure des antioxydants primaires qui piègent les radicaux libres. Les antioxydants primaires peuvent être utilisés seuls ou en combinaison avec d'autres antioxydants secondaires ou des stabilisants UV.

On peut par exemple citer l'IRGANOX ^{®} 1010, l'IRGANOX ^{®} B561, l'IRGANOX ^{®} 245, l'IRGAFOS ^{®} 168, TINUVIN^{®} 328 ou TINUVIN^{™} 770 commercialisés par BASF.

### B. Polyimine A

La présente invention concerne également une polyimine A obtenue par un procédé comprenant une étape de réaction entre au moins :
a) un (poly)uréthane-aldéhyde comprenant au moins 2 fonctions aldéhydes ;
b) une diamine primaire;
c) éventuellement en présence d'une monoamine primaire ou d'un monoaldéhyde si le rapport molaire -CHO/NH₂ est différent de 1 ;
caractérisé en ce que ledit (poly)uréthane-aldéhyde a) est un (poly)uréthane-dialdéhyde comprenant un radical allophanate.

Les (poly)uréthane-aldéhyde, diamines primaires, monoamine primaire, monoaldéhyde sont notamment tels que décrits et définis précédemment pour la composition de mastic, ledit (poly)uréthane-aldéhyde a) étant toutefois caractérisé en qu'il s'agit d'un (poly)uréthane-dialdéhyde comprenant un radical allophanate. En particulier, tous les modes de réalisation et modes préférés décrits précédemment pour ces composés s'appliquent ici pour la polyimine A.

Selon un mode de réalisation, le (poly)uréthane-dialdéhyde est obtenu par réaction entre :
- au moins un polyisocyanate C comprenant au moins un radical allophanate ; et
- au moins un aldéhyde hydroxylé.

De préférence, le (poly)uréthane-dialdéhyde est obtenu par réaction entre :
- au moins un polyisocyanate C comprenant au moins un radical allophanate ; et
- au moins un aldéhyde hydroxylé ;
dans des quantités telles que le rapport molaire NCO/OH (r2) va de 0,95 à 1,05, de préférence est égal à 1.

Selon un mode de réalisation préféré, le polyisocyanate C est l'allophante de HDI ayant notamment la formule (Y1) suivante :

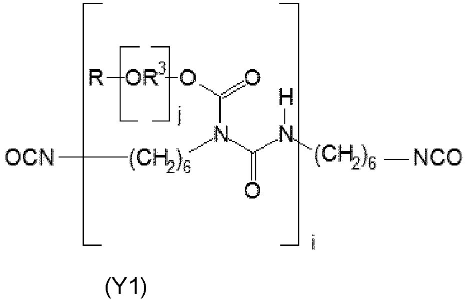

Selon un autre mode de réalisation préféré, le polyisocyanate C est un polyuréthane comprenant au moins deux fonctions terminales NCO préparé par un procédé comprenant une réaction de polyaddition E1) :
i) d'au moins un polyisocyanate ;
ii) avec au moins un polyol,

dans des quantités telles que le rapport molaire NCO/OH (r1) est strictement supérieur à 1 ;
l'étape E1) mettant en oeuvre de préférence au moins un allophanate de HDI, et de préférence ayant la formule (Y1) suivante :

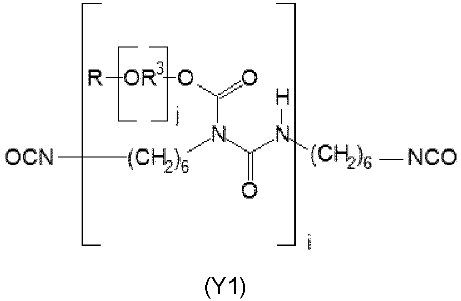

De préférence, le (poly)uréthane-aldéhyde a) a l'une des formules (I) ou (II) suivantes : 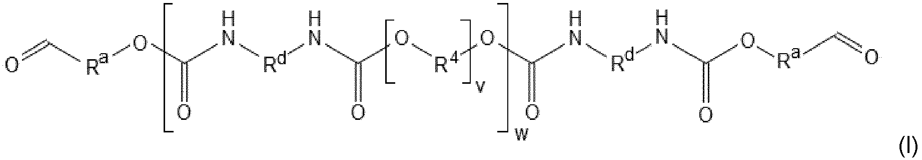 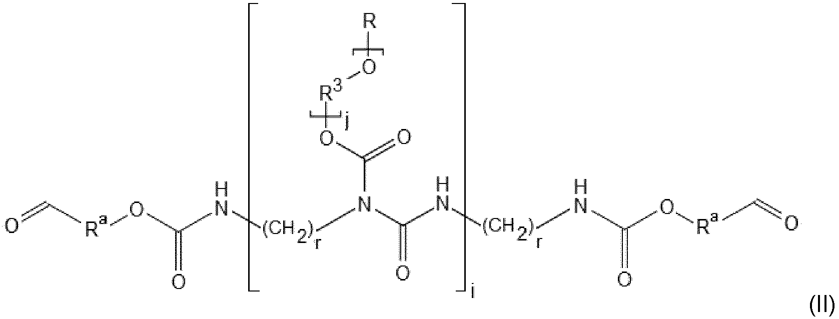 dans lesquelles :
- R^{a} est tel que défini ci-dessus ;
- R^{d} représente le radical suivant : 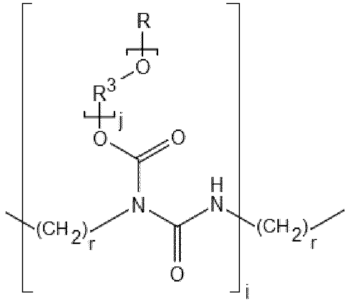 dans laquelle i est un nombre entier allant de 1 à 2, j est un nombre entier allant de 0 à 9, et de préférence 2 à 5, r est un nombre entier allant de 1 à 10, R représente une chaine hydrocarbonée, saturée ou insaturée, cyclique ou acyclique, linéaire ou ramifiée, comprenant de 1 à 20 atomes de carbone, de préférence de 1 à 12 atomes de carbones, 6 à 14 atomes de carbone, R³ représente un groupe divalent alkylène, linéaire ou ramifié, ayant de 2 à 4 atomes de carbones, et de préférence un groupe divalent propylène ;
- R⁴ représente un radical hydrocarboné divalent issu d'un polyol par remplacement de chacun des deux groupes hydroxyles par une valence libre ;
- v est un nombre entier tel que la masse moléculaire moyenne en nombre du bloc polyéther de formule -[OR⁴]ᵥ- va de 60 g/mol à 22 000 g/mol, de préférence de 600 g/mol à 18 000 g/mol, de préférence 1 000 g/mol à 12 000 g/mol, de préférence de 1 000 à 8 000 g/mol et encore plus préférentiellement de 1 000 g/mol à 4 000 g/mol.
- w est un nombre entier tel que la masse moléculaire moyenne en nombre (Mn) du (poly)uréthane-aldéhyde de formule (I) va de 500 g/mol à 22 000 g/mol, de préférence de 500 g/mol à 18 000 g/mol, de préférence encore de 500 g/mol à 12 000 g/mol, et encore plus préférentiellement de 600 à 5 000 g/mol.

Parmi les composés de formule (II), on peut par exemple citer les composés de formules suivantes : 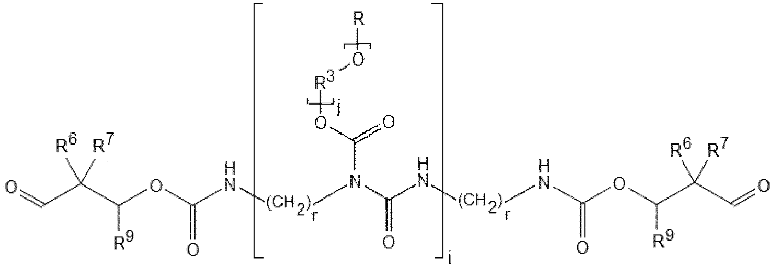 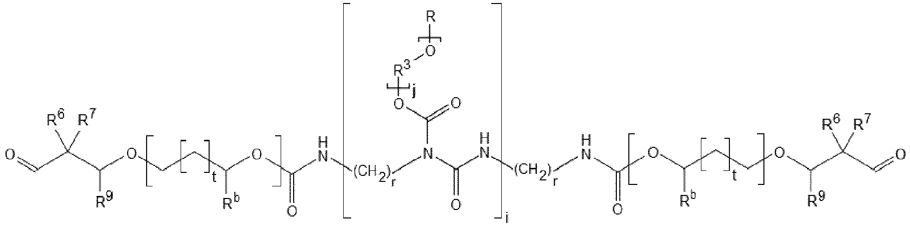 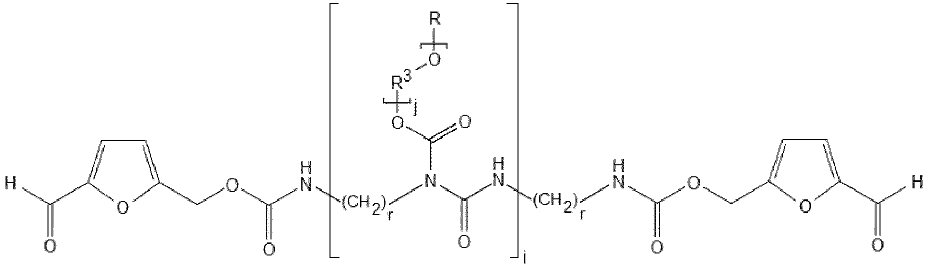 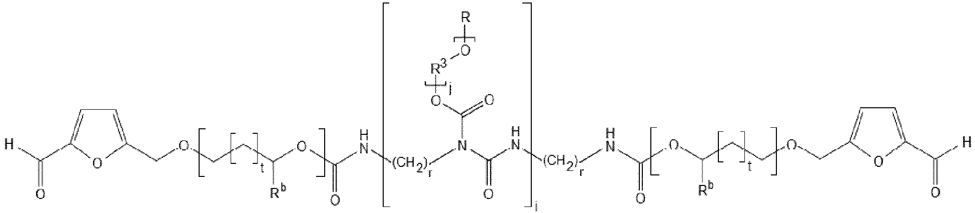 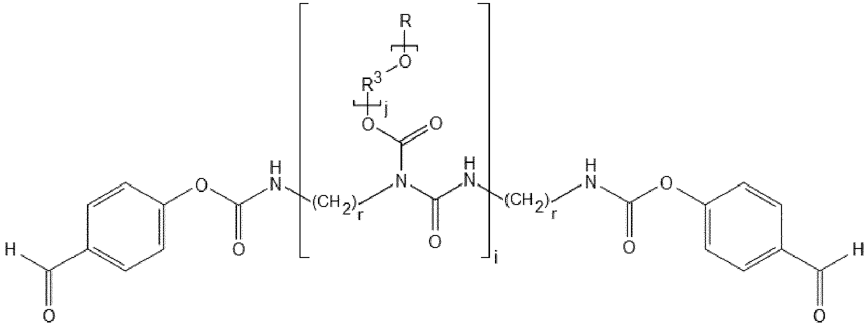 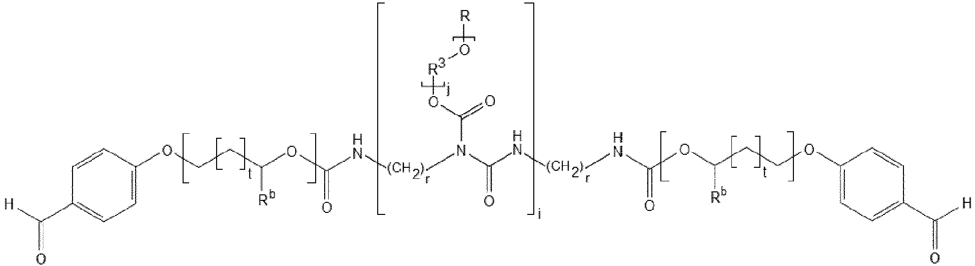 dans lesquelles R, R^{b}, R³, r, t, u, i, j, R⁶, R⁷, R⁹ sont tels que définis précédemment.

Dans le cadre de l'invention, par « comprise entre x et y », ou « allant de x à y », on entend un intervalle dans lequel les bornes x et y sont incluses. Par exemple, la gamme «comprise entre 0% et 25% » inclus notamment les valeurs 0% et 25%.

L'invention est à présent décrite dans les exemples de réalisation suivants qui sont donnés à titre purement illustratif, et ne sauraient être interprétés pour en limiter la portée.

### EXEMPLES

Les ingrédients suivants ont été utilisés :
- TOLONATE^{™} X-FLO 100 disponible chez VENCOREX : allophanate de HDI et d'alcool gras éthoxylé ayant une teneur massique en groupement NCO de 12,3 ± 1.0 % ;
- 2,2-diméthyl-3-hydroxypropanal ou Hydroxypivalaldehyde (numéro CAS : 597-31-9) disponible chez BIOSYNTH ;
- 5-(hydroxyméthyl)furfural (numéro CAS : 67-47-0) disponible chez PURAC BIOQUIMICA ;
- DESMOPHEN 4042 BT disponible chez COVESTRO : PPG triol ayant une masse molaire moyenne en nombre voisine de 3700 g/mol (IOH = 43 - 46 mg KOH/g) ;
- VORANOL 2000 L disponible chez DOW : PPG diol ayant une masse molaire moyenne en nombre voisine de 2000 g/mol (IOH = 53.5 - 57.5 mg KOH/g) ;
- VORANOL 1000 L disponible chez DOW : PPG diol ayant une masse molaire moyenne en nombre voisine de 1000 g/mol (IOH = 106 - 114 mg KOH/g) ;
- VORANOL P 400 disponible chez DOW : PPG diol ayant une masse moéculiare voisine de 430 g/mol (IOH = 250 - 270 mg KOH/g) ;
- DESMODUR T 100 disponible chez: 2,4'-TDI ayant une teneur massique en groupement NCO ≥ 48,0% en poids ;
- DOTL disponible chez TIB CHEMICALS : dilaurate de dioctylétain ;
- Xylène disponible chez SIGMA-ALDRICH ;
- JEFFAMINE^{®} D-400 disponible chez HUNTSMAN ayant une masse moléculaire moyenne en nombre (Mn) voisine de 450 g/mol (Alcalinité primaire = 4.1 - 4.7 méq/g).

### Exemple 1 - Synthèse d'uréthane-dialdéhyde sur base allophanate NCO terminé / 2,2-diméthyl-3-hydroxypropanal U1

L'uréthane-dialdéhyde suivant a été synthétisé d'après le mode opératoires décrit dans US 3,392,148 ou JP 2015,064,998 en faisant réagir 1 mole de TOLONATE X-FLO 100 ayant une teneur massique en NCO de 12,3 % (polyisocyanate C) avec 2 moles de 2,2-diméthyl-3-hydroxypropanal. On obtient quantitativement l'uréthane-dialdhéhyde U1 suivant ayant une masse molaire de 884 g/mol et 2,26 méq/g de fonction aldéhyde.

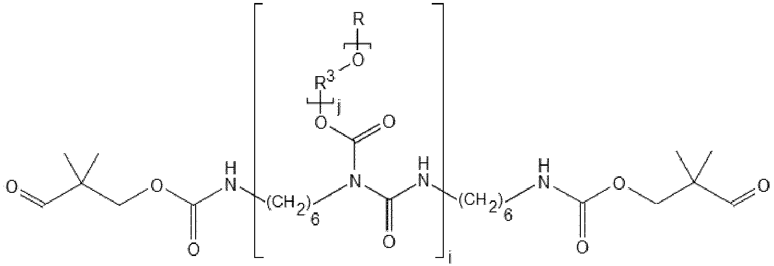

### Exemple 2 - Synthèse d'uréthane-dialdéhyde sur base allophanate NCO terminé 1 5-(hydroxyméthyl)furfural U2

L'uréthane-dialdéhyde U2 suivant a été synthétisé d'après le mode opératoires décrit dans US 3,392,148 ou JP 2015,064,998 en faisant réagir 1 mole de TOLONATE X-FLO 100 ayant une teneur massique en NCO de 12,3 % (polyisocyanate C) avec 2 moles de 5-(hydroxyméthyl)furfural (rapport molaire NCO / OH = 1). On obtient quantitativement l'uréthane-diadhéhyde U2ayant une masse molaire de 933 g/mol et 2,14 méq/g de fonction aldéhyde.

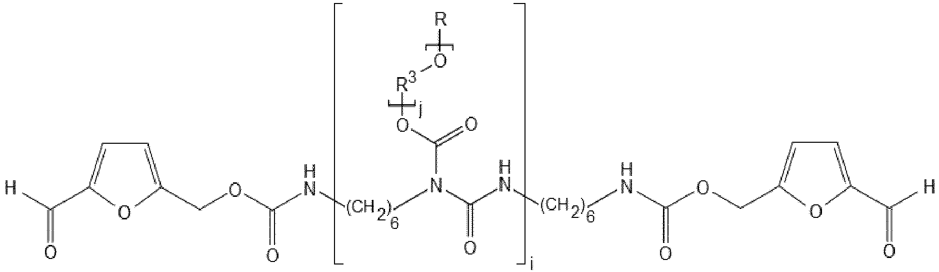

### Exemple 3 - Synthèse du polyuréthane-dialdéhyde sur base polyuréthane terminé NCO 1 5-(hydroxyméthyl)furfural U3

Le polyuréthane-dialdéhyde U3 a été synthétisé en 2 étapes.

### Etape 1 - Synthèse du polyuréthane terminé NCO terminé

Un polyuréthane terminé NCO a été préparé par mélange des ingrédients indiqués dans le tableau suivant à une température inférieure ou égale à 95°C dans des conditions anhydres. Les quantités indiquées dans le tableau ci-dessous sont exprimées en pourcentage en poids par rapport au poids total de la solution de polyuréthane terminé NCO.

| **Ingédients** | |
|---|---|
| PPG diol ayant une masse molaire moyenne en nombre de 430 g/mol : VORANOL P 400 | 25,1 |
| Allophanate de HDI et d'alcool gras éthoxylé (%NCO = 12,3% en poids) : TOLONATE^{™} X-FLO 100 | 59,7 |
| Catalyseur (DOTL) | 0.012 |
| Toluène | 15,2 |
| Rapport molaire NCO/OH | 1,5 |
| % en poids de NCO final | 3,0 |

Dans le tableau ci-dessus, le % en poids de NCO final correspond à la quantité de fonctions NCO dans la solution de polyuréthane terminé NCO à la fin de la réaction de préparation du polyuréthane, exprimé par rapport au poids total de la solution de polyuréthane terminé NCO

### Etape 2 - Synthèse du polyuréthane-dialdéhyde

Le polyuréthane-dialdéhyde U3 a été synthétisé quantitativement d'après le mode opératoires décrit dans US 3,392,148 en faisant réagir 1 mole du polyuréthane terminé NCO de l'étape 1 avec 2 moles de 5-(hydroxyméthyl)furfural (rapport molaire NCO / OH = 1). On obtient quantitativement le polyuréthane-diadhéhyde U3 ayant une masse molaire de 3092 g/mol et 0,65 méq/g de fonction aldéhyde.

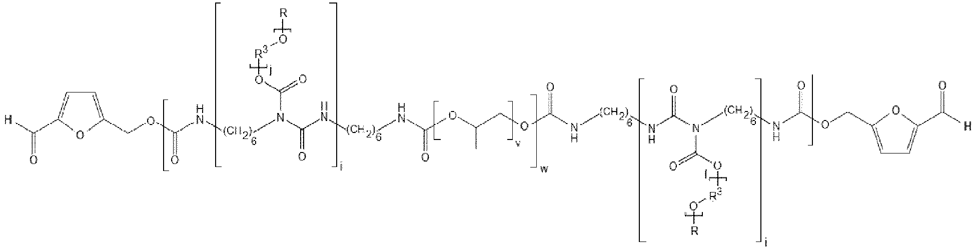

### Exemple 4 - Synthèse des polyimines

Dans un réacteur équipé d'une agitation et d'un appareil de Dean-Stark, on dissout dans 500 ml de toluène sous atmosphère inerte (azote), 1 mole de (poly)uréthane-dialdéhyde (exemple 1, 2 ou 3), 1 mmol d'acide formique puis la diamine primaire (ex. JEFFAMINE^{®} D-400 disponible chez HUNTSMAN) dans une quantité telle que le rapport molaire -CHO / - NH2 > 1 permette l'obtention d'une polyimine de masse moléculaire en nombre (Mn) souhaitée. On chauffe et on maintient au reflux pendant environ 6 heures jusqu'à ce qu'il n'y ait plus élimination d'eau par distillation azéotropique puis on élimine le toluène par distillation sous pression réduite (1 mm Hg). Les polyimines (I1), (I2) et (I3) sont obtenues avec un rendement quantitatif. Selon la viscosité des polyimines obtenues, il est possible de diluer les polyimines dans le xylène jusqu'à 85 % d'extrait sec.

Nous avons utilisé un rapport molaire -CHO / -NH2 de 1,1 pour la synthèse des polyimines. Les caractéristiques des polyimines obtenues ont été regroupées dans le tableau suivant :

| | **I1** | **I2** | **I3** |
|---|---|---|---|
| (poly)uréthane-dialdéhyde | Exemple 1 | Exemple 2 | Exemple 3 |
| Masse moléculaire moyenne en nombre (Mn) en g/mol | 2773 | 2881 | 7630 |
| Teneur en fonction C=N en méq/g | 1,44 | 1,39 | 0,52 |

### Exemple 5 : test applicatif

### Préparation du polyuréthane P1 terminé NCO

L'exemple non limitatif de polyuréthane P terminé NCO utilisé dans l'exemple de référence hors invention (sans aldimine) et dans les exemples C1 à C3 selon l'invention (avec des aldimines selon l'invention) a été préparé par mélange des ingrédients indiqués dans le tableau suivant à une température inférieure ou égale à 95°C dans des conditions anhydres. Les quantités indiquées dans le tableau ci-dessous sont exprimées en pourcentage en poids par rapport au poids total de la composition de polyuréthane de chacun des exemples.

| **Ingédients** | **P1** |
|---|---|
| PPG triol ayant une masse molaire moyenne en nombre de 3700 g/mol (IOH = 44,5 mg KOH/g) : DESMOPHEN 4042 BT | 38,3 |
| PPG diol ayant une masse molaire moyenne en nombre de 2000 g/mol : VORANOL 2000 L | 36,9 |
| 2,4'-TDI (%NCO ≥ 48,0% en poids) : DESMODUR T 100 | 9,6 |
| Catalyseur (DOTL) | 0,012 |
| Xylène | 15,2 |
| Rapport molaire NCO/OH | 1,6 |
| % en poids de NCO final | 1,8 |

Dans le tableau ci-dessus, le % en poids de NCO final correspond à la quantité de fonctions NCO dans la solution de polyuréthane P1 à la fin de la réaction de préparation du polyuréthane, exprimé par rapport au poids total de la solution de polyuréthane.

### Préparation des compositions de mastic

Des compositions de mastic ont ensuite été formulées à partir du polyuréthane P1 terminé NCO préparé conformément au procédé ci-dessus.

La composition de mastic de référence hors invention (sans aldimine) et les compositions de mastics **C1** à **C3** selon l'invention (avec des polyimines selon l'invention) ont été reportées dans le tableau suivant :

| | **Référence** | **C1** | **C2** | **C3** |
|---|---|---|---|---|
| Prépolymère (P1) | 19,40 | 17,31 | 17,11 | 17,11 |
| Mesamoll : CAS 91082-17-6 | 16,90 | 15,27 | 15.27 | 5,22 |
| Gel Paste CAS 77703-56-1 disponible chez SIKA (dibutyl-4-4'-methylenedi(phenyl)urée) | 12,33 | 12,34 | 12,34 | 12,34 |
| DIDP : diisodécyl phtalate | 2,10 | - | - | - |
| PTSI p-toluenesulfonyl isocyanate | 0,40 | 0,40 | 0,40 | 0,40 |
| IPDI | 0,40 | 0,40 | 0,40 | 0,40 |
| XDI | 0,20 | 0,20 | 0,20 | 0,20 |
| Silquest A-187 (MOMENTIVE) | 0,17 | 0,17 | 0,17 | 0,17 |
| Tinuvin B 75 (BASF) | 0,14 | 0,14 | 0,14 | 0,14 |
| Xylène | 1,90 | 1,90 | 1,90 | 1,90 |
| | | | | |
| PVC (solvin 373 MC) | 15,60 | 15,61 | 15,61 | 15,61 |
| OMYA BSH | 25,00 | 25,01 | 25,01 | 25,01 |
| TiO₂ | 4,90 | 4,90 | 4,90 | 4,90 |
| Aerosil R 202 | 0,51 | 0,51 | 0,51 | 0,51 |
| | | | | |
| Polyimine I1 | | 5,74 | | |
| Polyimine I2 | | | 5,94 | |
| Polyimine I3 | | | | 15,89 |
| Acide Salicylique | | 0,10 | 0,20 | 0,20 |
| | | | | |
| Catalyseur d'étain | 0,05 | - | - | - |

Les compositions de mastic ci-dessus formulées à partir du polyuréthane terminé NCO (P1) et des aldimines selon l'invention comparativement à la composition de mastic de référence ont été caractérisées et les résultats reportés dans le tableau ci-dessous :

| | **Référence** | **C1** | **C2** | **C3** |
|---|---|---|---|---|
| Temps de formation de peau (min) | 7 h | 90 min | 90 min | 2 h |
| Extrusion (g/min) à t⁰ | 250 | 300 | 300 | 200 |
| Boeing test | 0 | 0 | 0 | 0 |
| Elongation à la rupture Haltère (%) | 500 | 550 | 550 | 700 |
| Module 100% Haltère (MPa) | 0,55 | 0,58 | 0,55 | 0,50 |
| Module max. (MPa) | 0,80 | 1,00 | 1,00 | 0,75 |
| Stabilité à 7 jours | OK | OK | OK | OK |
| Extrusion à t⁰ + 3 semaines à 40°C (g/min) | 210 | 250 | 250 | 170 |
| Bullage | Oui | Non | Non | Non |

### Caractérisation :

- Le temps de formation de peau (« skinning time » en anglais) a été mesuré selon la norme ISO 291 à 23°C et 50% d'humidité relative,
- L'extrusion correspond à la quantité en gramme de mastic qui a pu être extrudée par minute, sous une pression du piston de 3 bars, à 23°C,
- Le module 100% Haltère a été mesuré selon la norme NF ISO 37 (mars 2012) avec des éprouvettes haltères,
- Le module max. a été mesuré selon la norme ISO 8339,
- L'élongation à la rupture Haltère a été mesurée selon la norme NF ISO 37 (mars 2012) avec des éprouvettes haltères,
- La résistance au fluage a été vérifiée selon norme ASTM D2202 dite du « Boeing Test ».
- L'extrusion des compositions de mastic est réalisée au travers d'une buse d'extrusion de 4 mm de diamètre sous une pression de 3 bar à 23°C et hygrométrie constante à la fin du mélange (t⁰) et 3 semaines à 40°C après la fin du mélange (t⁰ + 3 semaines) afin d'évaluer leur viscosité.

## Revendications

1. Composition de mastic réticulable à l'humidité comprenant :
- au moins un polyuréthane P comprenant au moins deux fonctions terminales NCO ;
- au moins une polyimine A obtenue par un procédé comprenant une étape de réaction entre au moins :
a) un (poly)uréthane-aldéhyde comprenant au moins 2 fonctions aldéhydes ;
b) une diamine primaire;
c) éventuellement en présence d'une monoamine primaire ou d'un monoaldéhyde si le rapport molaire -CHO/NH₂ est différent de 1.

2. Composition selon la revendication 1, dans laquelle le (poly)uréthane-aldéhyde a) est obtenu par réaction entre :
- au moins un polyisocyanate C;
- au moins un aldéhyde-hydroxylé.

3. Composition selon l'une quelconque des revendications 1 ou 2, dans laquelle le polyisocyanate C est choisi parmi les triisocyanates, les diisocyanates, et les polyuréthanes comprenant au moins deux fonctions terminales NCO.

4. Composition selon l'une quelconque des revendications 1 à 3, dans laquelle le (poly)uréthane-aldéhyde a) est un (poly)uréthane-dialdéhyde comprenant un radical allophanate.

5. Composition selon l'une quelconque des revendications 1 à 4, dans laquelle le polyisocyanate C est l'allophante de HDI ayant notamment la formule (Y1) suivante :

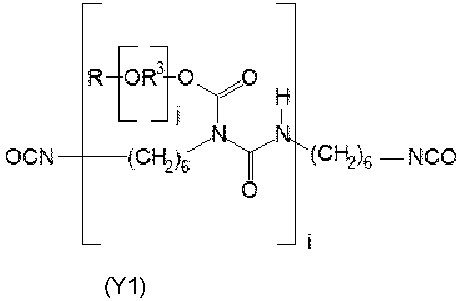

6. Composition selon l'une quelconque des revendications 1 à 4, dans laquelle le polyisocyanate C est un polyuréthane comprenant au moins deux fonctions terminales NCO préparé par un procédé comprenant une réaction de polyaddition E1) :
i) d'au moins un polyisocyanate ;
ii) avec au moins un polyol,
dans des quantités telles que le rapport molaire NCO/OH (r1) est strictement supérieur à 1 ;
l'étape E1) mettant en oeuvre de préférence au moins un allophanate de HDI, et de préférence ayant la formule (Y1) suivante :

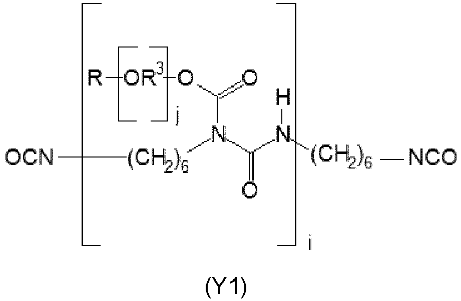

7. Composition selon l'une quelconque des revendications 1 à 6, dans laquelle les aldéhydes hydroxylés ont l'une des formules suivantes : 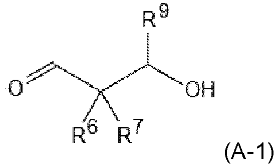 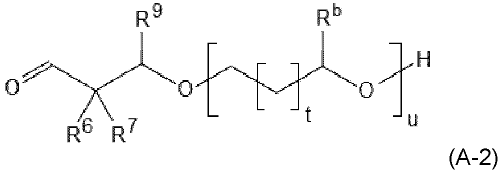 avec R⁶ et R⁷ représentant chacun, indépendamment l'un de l'autre, un radical hydrocarboné monovalent comprenant de 1 à 12 atomes de carbone, ou R⁶ et R⁷ forment ensemble un cycle aliphatique comprenant de 4 à 12 atomes de carbone, ledit cycle étant éventuellement substitué ; R⁹ représentant un hydrogène, un radical alkyle linéaire ou ramifié, un radical cycloalkyle, un radical arylalkyle, ou un radical alcoxycarbonyle comprenant de 1 à 12 atomes de carbone ; R^{b} représente H ou un radical alkyle linéaire ou ramifié comprenant de 1 à 7 atomes de carbone, préférentiellement de 1 à 3 atomes de carbones ;u représente un entier allant de 1 à 380, de préférence de 1 à 210, plus préférentiellement de 1 à 140, et encore plus préférentiellement de 1 à 10 ; et t représente un entier allant de 0 à 18, préférentiellement de 0 à 12, de préférence encore de 0 à 6, et encore plus préférentiellement de 0 à 2. 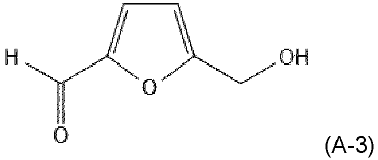 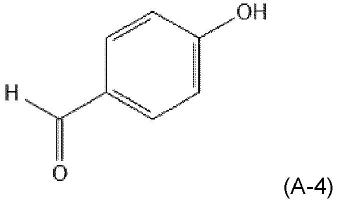 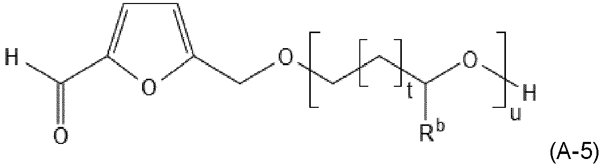 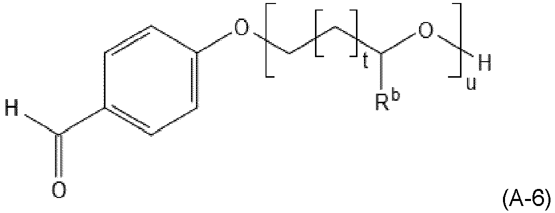 dans lesquelles :
- t est un entier allant de 0 à 18, préférentiellement de 0 à 12, de préférence 0 à 6 et encore plus préférentiellement de 0 à 2.
- u représente un entier allant de 1 à 380, de préférence de 1 à 210, plus préférentiellement de 1 à 140, et encore plus préférentiellement de 1 à 10 ; et t représente un entier allant de 0 à 18, préférentiellement de 0 à 12, de préférence encore de 0 à 6, et encore plus préférentiellement de 0 à 2;
- R^{b} représente H ou un radical alkyle allant de 1 à 7 atomes de carbone, préférentiellement de 1 à 3 atomes de carbone.

8. Composition selon l'une quelconque des revendications 1 à 7, dans laquelle le (poly)uréthane-aldéhyde a) a l'une des formules (I) ou (II) suivantes : 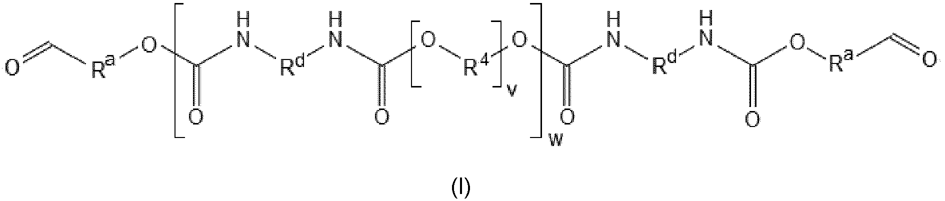 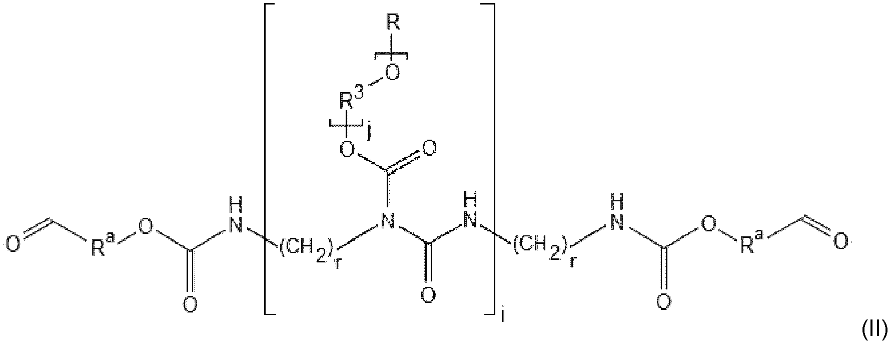 dans lesquelles :
- R^{a} est tel que défini ci-dessus ;
- R^{d} représente le radical suivant : 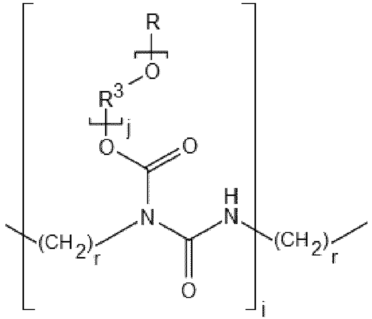 dans laquelle i est un nombre entier allant de 1 à 2, j est un nombre entier allant de 0 à 9, et de préférence 2 à 5, r est un nombre entier allant de 1 à 10, R représente une chaine hydrocarbonée, saturée ou insaturée, cyclique ou acyclique, linéaire ou ramifiée, comprenant de 1 à 20 atomes de carbone, de préférence de 1 à 12 atomes de carbones, 6 à 14 atomes de carbone, R³ représente un groupe divalent alkylène, linéaire ou ramifié, ayant de 2 à 4 atomes de carbones, et de préférence un groupe divalent propylène ;
- R⁴ représente un radical hydrocarboné divalent issu d'un polyol par remplacement de chacun des deux groupes hydroxyles par une valence libre ;
- v est un nombre entier tel que la masse moléculaire moyenne en nombre du bloc polyéther de formule -[OR⁴]ᵥ- va de 60 g/mol à 22 000 g/mol, de préférence de 600 g/mol à 18 000 g/mol, de préférence 1 000 g/mol à 12 000 g/mol, de préférence de 1 000 à 8 000 g/mol et encore plus préférentiellement de 1 000 g/mol à 4 000 g/mol.
- w est un nombre entier tel que la masse moléculaire moyenne en nombre (Mn) du (poly)uréthane-aldéhyde de formule (I) va de 500 g/mol à 22 000 g/mol, de préférence de 500 g/mol à 18 000 g/mol, de préférence encore de 500 g/mol à 12 000 g/mol, et encore plus préférentiellement de 600 à 5 000 g/mol.

9. Composition selon l'une quelconque des revendications 1 à 8, dans laquelle la diamine primaire est choisie dans le groupe constitué des amines aliphatiques linéaires ou ramifiées ; des polyamines aliphatiques ; des polyétheramines ; des polyamidoamines ; des amines grasses dimères ; des dérivés de diaminoacides tels que par exemple leurs dérivés diaminoesters ou diaminoamides ; des amines de formule (B) suivante H₂N-CH₂-Z-CH₂₋NH₂ dans laquelle Z représente un radical hydrocarboné divalent, linéaire ou ramifié, cyclique, aliphatique ou aromatique, saturé ou insaturé, comprenant de préférence de 1 à 38 atomes de carbone, ledit radical hydrocarboné étant éventuellement interrompu par un ou plusieurs hétéroatomes choisis parmi -S-, -O- et/ou un ou plusieurs groupes divalents amine tertiaire -NR'-avec R' représentant un groupe alkyle linéaire ou ramifié, saturé ou insaturé, comprenant 1 à 22 atomes de carbone, de préférence de 1 à 18, de préférence de 1 à 14, préférentiellement de 1 à 10 et avantageusement de 1 à 6 atomes de carbone ; et de leurs mélanges.

10. Polyimine A obtenue par un procédé comprenant une étape de réaction entre au moins :
a) un (poly)uréthane-aldéhyde comprenant au moins 2 fonctions aldéhydes ;
b) une diamine primaire;
c) éventuellement en présence d'une monoamine primaire ou d'un monoaldéhyde si le rapport molaire -CHO/NH₂ est différent de 1 ;
**caractérisé en ce que** ledit (poly)uréthane-aldéhyde a) est un (poly)uréthane-dialdéhyde comprenant un radical allophanate.

11. Polyimine A selon la revendication 10, **caractérisée en ce que** le (poly)uréthane-dialdéhyde est obtenu par réaction entre :
- au moins un polyisocyanate C comprenant au moins un radical allophanate ; et
- au moins un aldéhyde hydroxylé.

12. Polyimine A selon la revendication 11, **caractérisée en ce que** le (poly)uréthane-dialdéhyde est obtenu par réaction entre :
- au moins un polyisocyanate C comprenant au moins un radical allophanate ; et
- au moins un aldéhyde hydroxylé ;
dans des quantités telles que le rapport molaire NCO/OH (r2) va de 0,95 à 1,05, de préférence est égal à 1.

13. Polyimine selon l'une quelconque des revendications 11 à 12, **caractérisée en ce que** le polyisocyanate C est l'allophante de HDI ayant notamment la formule (Y1) suivante :

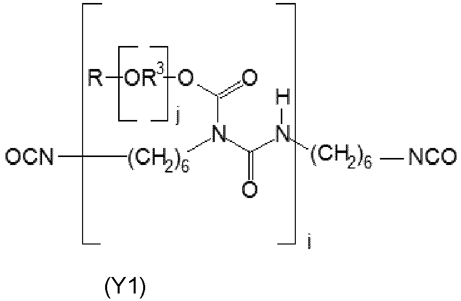

14. Polyimine selon l'une quelconque des revendications 10 à 13, **caractérisée** en que le polyisocyanate C est un polyuréthane comprenant au moins deux fonctions terminales NCO préparé par un procédé comprenant une réaction de polyaddition E1) :
i) d'au moins un polyisocyanate ;
ii) avec au moins un polyol,
dans des quantités telles que le rapport molaire NCO/OH (r1) est strictement supérieur à 1 ;
l'étape E1) mettant en oeuvre de préférence au moins un allophanate de HDI, et de préférence ayant la formule (Y1) suivante :

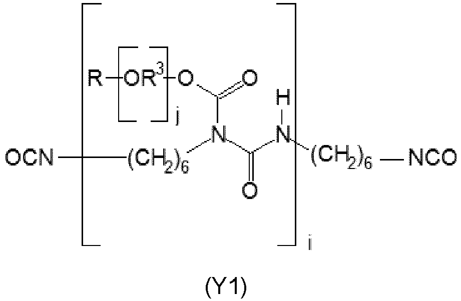

15. Polyimine A selon l'une quelconque des revendications 10 à 14, **caractérisée en ce que** le (poly)uréthane-aldéhyde a) a l'une des formules (I) ou (II) suivantes : 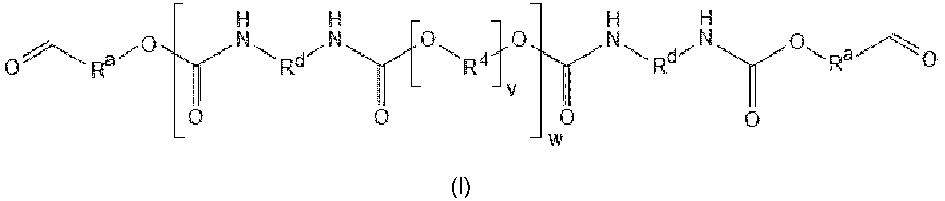 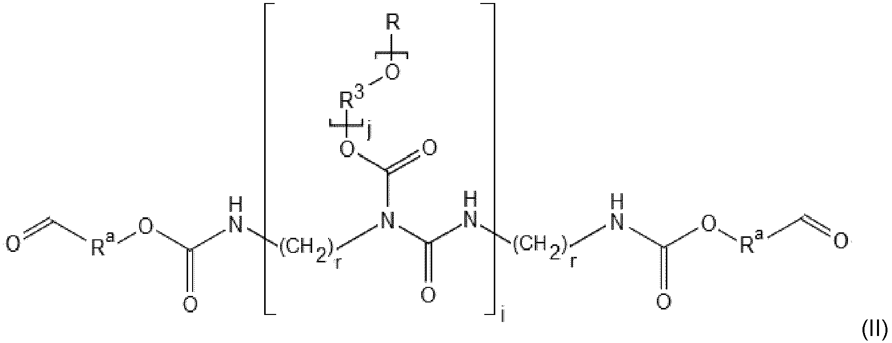 dans lesquelles :
- R^{a} est tel que défini ci-dessus ;
- R^{d} représente le radical suivant : 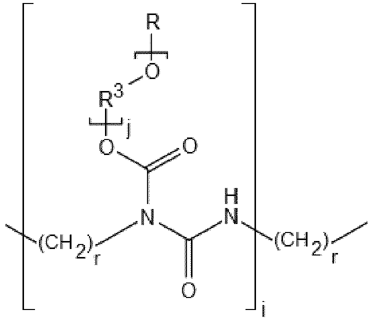 dans laquelle i est un nombre entier allant de 1 à 2, j est un nombre entier allant de 0 à 9, et de préférence 2 à 5, r est un nombre entier allant de 1 à 10, R représente une chaine hydrocarbonée, saturée ou insaturée, cyclique ou acyclique, linéaire ou ramifiée, comprenant de 1 à 20 atomes de carbone, de préférence de 1 à 12 atomes de carbones, 6 à 14 atomes de carbone, R³ représente un groupe divalent alkylène, linéaire ou ramifié, ayant de 2 à 4 atomes de carbones, et de préférence un groupe divalent propylène ;
- R⁴ représente un radical hydrocarboné divalent issu d'un polyol par remplacement de chacun des deux groupes hydroxyles par une valence libre ;
- v est un nombre entier tel que la masse moléculaire moyenne en nombre du bloc polyéther de formule -[OR⁴]ᵥ- va de 60 g/mol à 22 000 g/mol, de préférence de 600 g/mol à 18 000 g/mol, de préférence 1 000 g/mol à 12 000 g/mol, de préférence de 1 000 à 8 000 g/mol et encore plus préférentiellement de 1 000 g/mol à 4 000 g/mol.
- w est un nombre entier tel que la masse moléculaire moyenne en nombre (Mn) du (poly)uréthane-aldéhyde de formule (I) va de 500 g/mol à 22 000 g/mol, de préférence de 500 g/mol à 18 000 g/mol, de préférence encore de 500 g/mol à 12 000 g/mol, et encore plus préférentiellement de 600 à 5 000 g/mol.

## Patentansprüche

1. Durch Feuchtigkeit vernetzbare Dichtmittelzusammensetzung, die Folgendes umfasst:
- mindestens ein Polyurethan P, das mindestens zwei terminale NCO-Funktionen umfasst;
- mindestens ein Polyimin A, das durch ein Verfahren erhalten wird, das einen Reaktionsschritt zwischen zumindest Folgendem umfasst:
a) einem (Poly)Urethanaldehyd, der mindestens 2 Aldehydfunktionen umfasst;
b) einem primären Diamin;
c) gegebenenfalls in Gegenwart eines primären Monoamins oder eines Monoaldehyds, wenn das Stoffmengenverhältnis -CHO/NH₂ von 1 verschieden ist.

2. Zusammensetzung nach Anspruch 1, wobei der (Poly)Urethanaldehyd a) durch eine Reaktion zwischen Folgendem erhalten wird:
- mindestens einem Polyisocyanat C;
- mindestens einem Hydroxyaldehyd.

3. Zusammensetzung nach einem der Ansprüche 1 oder 2, wobei das Polyisocyanat C aus Triisocyanaten, Diisocyanaten und Polyurethanen ausgewählt ist, die mindestens zwei terminale NCO-Funktionen umfassen.

4. Zusammensetzung nach einem der Ansprüche 1 bis 3, wobei der (Poly)Urethanaldehyd a) ein (Poly)Urethandialdehyd ist, der einen Allophanatrest umfasst.

5. Zusammensetzung nach einem der Ansprüche 1 bis 4, wobei das Polyisocyanat C HDI-Allophanat ist, das insbesondere die folgende Formel (Y1) aufweist:

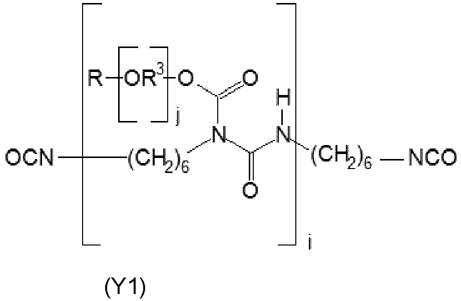

6. Zusammensetzung nach einem der Ansprüche 1 bis 4, wobei das Polyisocyanat C ein mindestens zwei terminale NCO-Funktionen umfassendes Polyurethan ist, das durch ein Verfahren hergestellt wird, das eine Polyadditionsreaktion E1):
i) mindestens eines Polyisocyanats
ii) mit mindestens einem Polyol
in solchen Mengen umfasst, dass das Stoffmengenverhältnis NCO/OH (r1) strikt größer als 1 ist;
wobei in Schritt E1) vorzugsweise mindestens ein HDI-Allophanat verwendet wird und das vorzugsweise die folgende Formel (Y1) aufweist:

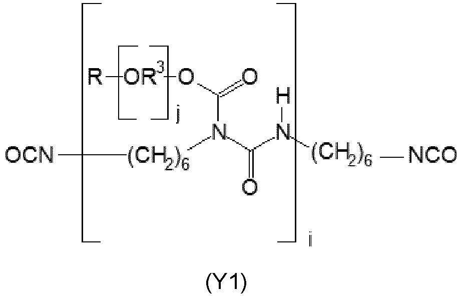

7. Zusammensetzung nach einem der Ansprüche 1 bis 6, wobei die Hydroxyaldehyde eine der folgenden Formeln aufweisen: 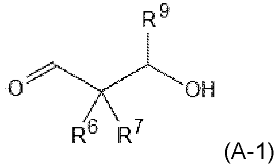 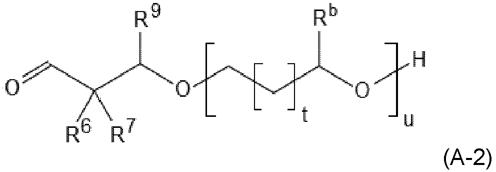 wobei R⁶ und R⁷ jeweils unabhängig voneinander einen einwertigen Kohlenwasserstoffrest darstellen, der 1 bis 12 Kohlenstoffatome umfasst, oder R⁶ und R⁷ zusammen einen aliphatischen Ring bilden, der 4 bis 12 Kohlenstoffatome umfasst, wobei der Ring gegebenenfalls substituiert ist; R⁹ Wasserstoff, einen linearen oder verzweigten Alkylrest, einen Cycloalkylrest, einen Arylalkylrest oder einen Alkoxycarbonylrest darstellt, der 1 bis 12 Kohlenstoffatome umfasst; R^{b} H oder einen linearen oder verzweigten Alkylrest darstellt, der 1 bis 7 Kohlenstoffatome, vorzugsweise 1 bis 3 Kohlenstoffatome umfasst; u eine ganze Zahl von 1 bis 380, vorzugsweise von 1 bis 210, stärker bevorzugt von 1 bis 140 und noch stärker bevorzugt von 1 bis 10, darstellt und t eine ganze Zahl von 0 bis 18, vorzugsweise von 0 bis 12, noch bevorzugter von 0 bis 6 und noch stärker bevorzugt von 0 bis 2, darstellt; 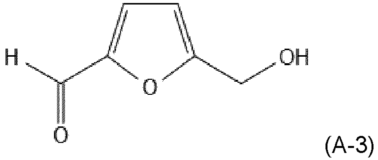 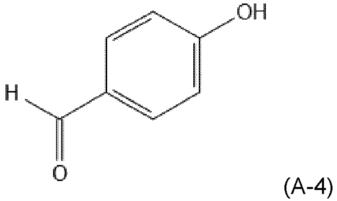 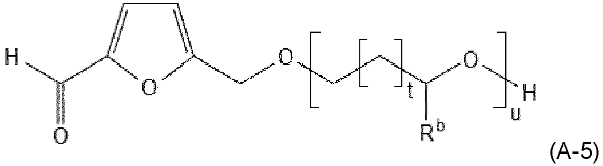 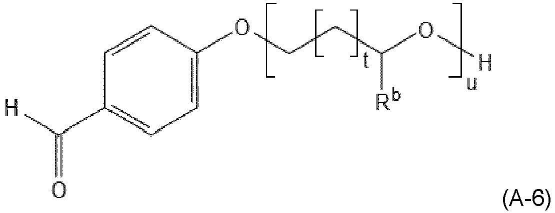 wobei:
- t eine ganze Zahl von 0 bis 18, vorzugsweise von 0 bis 12, bevorzugt von 0 bis 6 und noch stärker bevorzugt von 0 bis 2, ist;
- u eine ganze Zahl von 1 bis 380, vorzugsweise von 1 bis 210, stärker bevorzugt von 1 bis 140 und noch stärker bevorzugt von 1 bis 10, darstellt; und t eine ganze Zahl von 0 bis 18, vorzugsweise von 0 bis 12, noch bevorzugter von 0 bis 6 und noch stärker bevorzugt von 0 bis 2 darstellt;
- R^{b} H oder einen Alkylrest mit 1 bis 7 Kohlenstoffatomen, vorzugsweise 1 bis 3 Kohlenstoffatomen, darstellt.

8. Zusammensetzung nach einem der Ansprüche 1 bis 7, wobei der (Poly)Urethanaldehyd a) eine der folgenden Formeln (I) oder (II) aufweist: 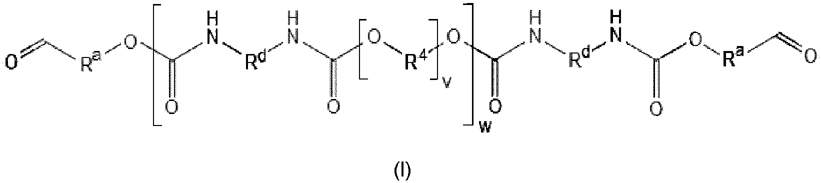 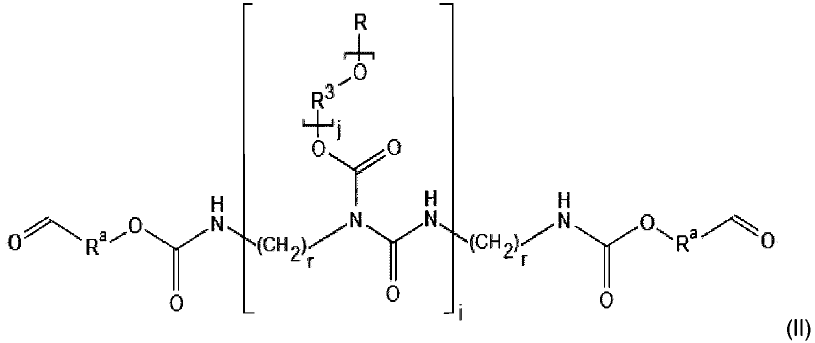 wobei:
- R^{a} wie oben definiert ist;
- R^{d} den folgenden Rest darstellt: 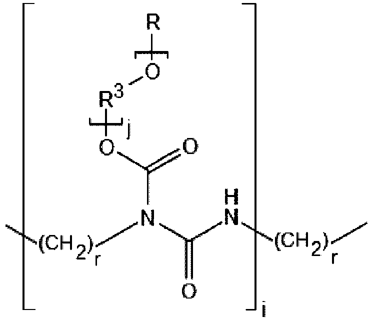
wobei i eine ganze Zahl von 1 bis 2 ist, j eine ganze Zahl von 0 bis 9 und vorzugsweise von 2 bis 5 ist, r eine ganze Zahl von 1 bis 10 ist, R eine gesättigte oder ungesättigte, cyclische oder acyclische, lineare oder verzweigte Kohlenwasserstoffkette darstellt, die 1 bis 20 Kohlenstoffatome, vorzugsweise 1 bis 12 Kohlenstoffatome, 6 bis 14 Kohlenstoffatome, umfasst, R³ eine lineare oder verzweigte zweiwertige Alkylengruppe mit 2 bis 4 Kohlenstoffatomen und vorzugsweise eine zweiwertige Propylengruppe darstellt;
- R⁴ einen zweiwertigen Kohlenwasserstoffrest darstellt, der von einem Polyol stammt, in dem jede der zwei Hydroxylgruppen durch eine freie Valenz ersetzt ist;
- v eine ganze Zahl ist, sodass das Zahlenmittel der Molmasse des Polyetherblocks der Formel -[OR⁴]ᵥ- von 60 g/mol bis 22 000 g/mol, vorzugsweise von 600 g/mol bis 18 000 g/mol, vorzugsweise von 1000 g/mol bis 12 000 g/mol, vorzugsweise von 1000 bis 8000 g/mol und noch stärker bevorzugt von 1000 g/mol bis 4000 g/mol beträgt;
- w eine ganze Zahl ist, sodass das Zahlenmittel (Mn) der Molmasse des (Poly)Urethanaldehyds der Formel (I) von 500 g/mol bis 22 000 g/mol, vorzugsweise von 500 g/mol bis 18 000 g/mol, noch bevorzugter von 500 g/mol bis 12 000 g/mol und noch stärker bevorzugt von 600 g/mol bis 5000 g/mol beträgt.

9. Zusammensetzung nach einem der Ansprüche 1 bis 8, wobei das primäre Diamin ausgewählt ist aus der Gruppe bestehend aus linearen oder verzweigten aliphatischen Aminen; aliphatischen Polyaminen; Polyetheraminen; Polyamidoaminen; Dimerfettaminen; Diaminosäure-Derivaten wie beispielsweise ihren Diaminoester- oder Diaminoamid-Derivaten; Aminen der folgenden Formel (B), H₂N-CH₂-Z-CH₂-NH₂, wobei Z einen linearen oder verzweigten, cyclischen, aliphatischen oder aromatischen, gesättigten oder ungesättigten zweiwertigen Kohlenwasserstoffrest darstellt, der vorzugsweise 1 bis 38 Kohlenstoffatome umfasst, wobei der Kohlenwasserstoffrest gegebenenfalls durch ein oder mehrere aus -S-, -O- ausgewählte Heteroatome und/oder eine oder mehrere zweiwertige tertiäre Amingruppen -NR'- unterbrochen ist, wobei R' eine lineare oder verzweigte, gesättigte oder ungesättigte Alkylgruppe darstellt, die 1 bis 22 Kohlenstoffatome, vorzugsweise 1 bis 18, vorzugsweise 1 bis 14, vorzugsweise 1 bis 10 und vorteilhafterweise 1 bis 6 Kohlenstoffatome umfasst;
und deren Mischungen.

10. Polyimin A, das durch ein Verfahren erhalten wird, das einen Reaktionsschritt zwischen zumindest Folgendem umfasst:
a) einem (Poly)Urethanaldehyd, der mindestens 2 Aldehydfunktionen umfasst;
b) einem primären Diamin;
c) gegebenenfalls in Gegenwart eines primären Monoamins oder eines Monoaldehyds, wenn das Stoffmengenverhältnis -CHO/NH₂ von 1 verschieden ist;
**dadurch gekennzeichnet, dass** der (Poly)Urethanaldehyd a) ein (Poly)Urethandialdehyd ist, der einen Allophanatrest umfasst.

11. Polyimin A nach Anspruch 10, **dadurch gekennzeichnet, dass** der (Poly)Urethandialdehyd durch eine Reaktion zwischen Folgendem erhalten wird:
- mindestens einem Polyisocyanat C, das mindestens einen Allophanatrest umfasst; und
- mindestens einem Hydroxyaldehyd.

12. Polyimin A nach Anspruch 11, **dadurch gekennzeichnet, dass** der (Poly)Urethandialdehyd durch eine Reaktion zwischen:
- mindestens einem Polyisocyanat C, das mindestens einen Allophanatrest umfasst; und
- mindestens einem Hydroxyaldehyd
in solchen Mengen erhalten wird, dass das Stoffmengenverhältnis NCO/OH (r2) von 0,95 bis 1,05 beträgt, vorzugsweise gleich 1 ist.

13. Polyimin nach einem der Ansprüche 11 bis 12, **dadurch gekennzeichnet, dass** das Polyisocyanat C HDI-Allophanat ist, das insbesondere die folgende Formel (Y1) aufweist:

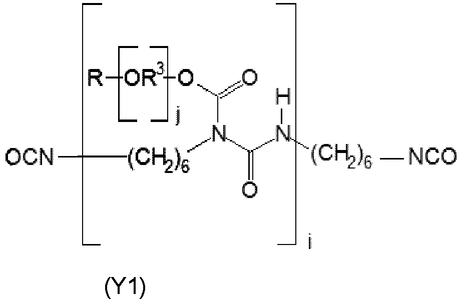

14. Polyimin nach einem der Ansprüche 10 bis 13, **dadurch gekennzeichnet, dass** das Polyisocyanat C ein mindestens zwei terminale NCO-Funktionen umfassendes Polyurethan ist, das durch ein Verfahren hergestellt wird, das eine Polyadditionsreaktion E1):
i) mindestens eines Polyisocyanats
ii) mit mindestens einem Polyol
in solchen Mengen umfasst, dass das Stoffmengenverhältnis NCO/OH (r1) strikt größer als 1 ist;
wobei in Schritt E1) vorzugsweise mindestens ein HDI-Allophanat verwendet wird und das vorzugsweise die folgende Formel (Y1) aufweist:

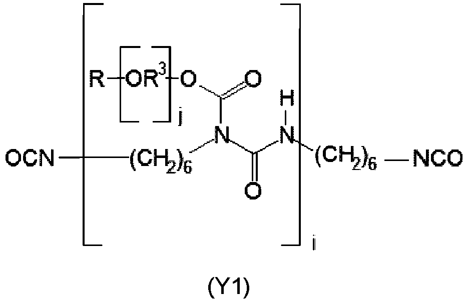

15. Polyimin A nach einem der Ansprüche 10 bis 14, **dadurch gekennzeichnet, dass** der (Poly)Urethanaldehyd a) eine der folgenden Formeln (I) oder (II) aufweist: 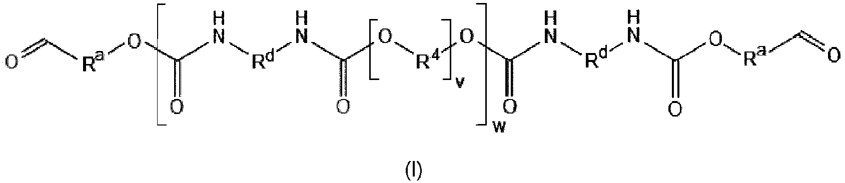 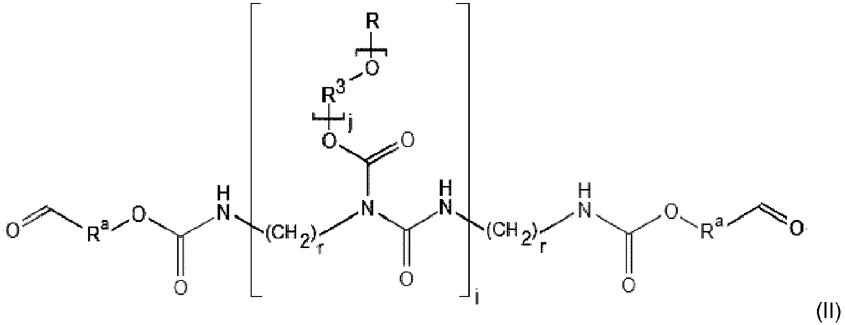 wobei:
- R^{a} wie oben definiert ist;
- R^{d} den folgenden Rest darstellt: 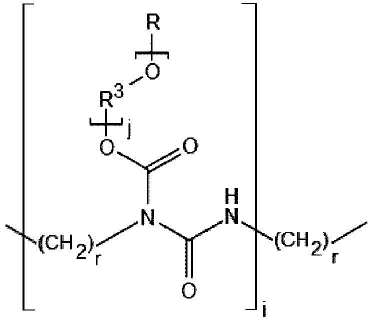 wobei i eine ganze Zahl von 1 bis 2 ist, j eine ganze Zahl von 0 bis 9 und vorzugsweise von 2 bis 5 ist, r eine ganze Zahl von 1 bis 10 ist, R eine gesättigte oder ungesättigte, cyclische oder acyclische, lineare oder verzweigte Kohlenwasserstoffkette darstellt, die 1 bis 20 Kohlenstoffatome, vorzugsweise 1 bis 12 Kohlenstoffatome, 6 bis 14 Kohlenstoffatome, umfasst, R³ eine lineare oder verzweigte zweiwertige Alkylengruppe mit 2 bis 4 Kohlenstoffatomen und vorzugsweise eine zweiwertige Propylengruppe darstellt;
- R⁴ einen zweiwertigen Kohlenwasserstoffrest darstellt, der von einem Polyol stammt, in dem jede der zwei Hydroxylgruppen durch eine freie Valenz ersetzt ist;
- v eine ganze Zahl ist, sodass das Zahlenmittel der Molmasse des Polyetherblocks der Formel -[OR⁴]ᵥ- von 60 g/mol bis 22 000 g/mol, vorzugsweise von 600 g/mol bis 18 000 g/mol, vorzugsweise von 1000 g/mol bis 12 000 g/mol, vorzugsweise von 1000 bis 8000 g/mol und noch stärker bevorzugt von 1000 g/mol bis 4000 g/mol beträgt;
- w eine ganze Zahl ist, sodass das Zahlenmittel (Mn) der Molmasse des (Poly)Urethanaldehyds der Formel (I) von 500 g/mol bis 22 000 g/mol, vorzugsweise von 500 g/mol bis 18 000 g/mol, noch bevorzugter von 500 g/mol bis 12 000 g/mol und noch stärker bevorzugt von 600 g/mol bis 5000 g/mol beträgt.

## Claims

1. Moisture-crosslinkable sealant composition comprising:
- at least one polyurethane P comprising at least two NCO end functions;
- at least one polyimine A obtained via a process comprising a step of reaction between at least:
a) a (poly)urethane-aldehyde comprising at least 2 aldehyde functions;
b) a primary diamine;
c) optionally in the presence of a primary monoamine or a monoaldehyde if the -CHO/NH₂ molar ratio is other than 1.

2. Composition according to Claim 1, wherein the (poly)urethane-aldehyde a) is obtained by reaction between:
- at least one polyisocyanate C;
- at least one hydroxyaldehyde.

3. Composition according to either one of Claims 1 and 2, wherein the polyisocyanate C is chosen from triisocyanates, diisocyanates and polyurethanes comprising at least two NCO end functions.

4. Composition according to any one of Claims 1 to 3, wherein the (poly)urethane-aldehyde a) is a (poly)urethane-dialdehyde comprising an allophanate radical.

5. Composition according to any one of Claims 1 to 4, wherein the polyisocyanate C is the HDI allophanate having in particular the following formula (Y1):

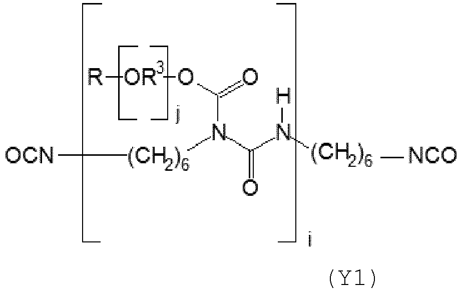

6. Composition according to any one of Claims 1 to 4, wherein the polyisocyanate C is a polyurethane comprising at least two NCO end functions which is prepared by a process comprising a polyaddition reaction E1):
i) of at least one polyisocyanate;
ii) with at least one polyol,
in amounts such that the NCO/OH molar ratio (r1) is strictly greater than 1;
step E1) preferably using at least one HDI allophanate, preferably having the following formula (Y1):

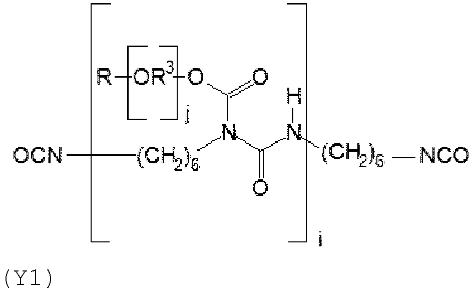

7. Composition according to any one of Claims 1 to 6, wherein the hydroxyaldehydes have one of the following formulae: 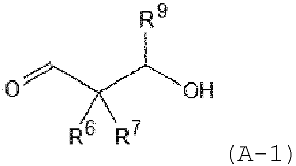 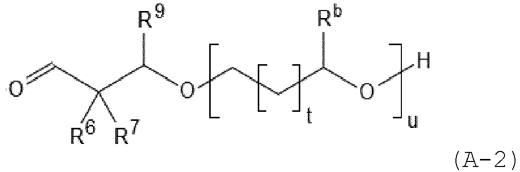 with R⁶ and R⁷ each representing, independently of one another, a monovalent hydrocarbon radical comprising from 1 to 12 carbon atoms, or R⁶ and R⁷ together form an aliphatic ring comprising from 4 to 12 carbon atoms, said ring being optionally substituted; R⁹ representing a hydrogen, a linear or branched alkyl radical, a cycloalkyl radical, an arylalkyl radical, or an alkoxycarbonyl radical comprising from 1 to 12 carbon atoms; R^{b} represents H or a linear or branched alkyl radical comprising from 1 to 7 carbon atoms, preferentially from 1 to 3 carbon atoms; u represents an integer ranging from 1 to 380, preferably from 1 to 210, more preferentially from 1 to 140, and more preferentially still from 1 to 10; and t represents an integer ranging from 0 to 18, preferentially from 0 to 12, more preferably from 0 to 6, and more preferentially still from 0 to 2. 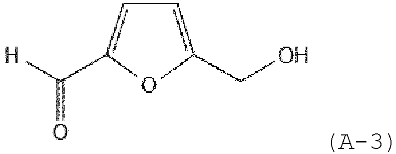 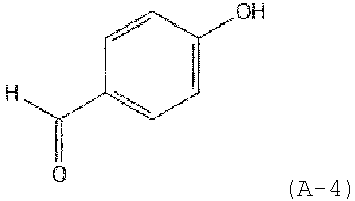 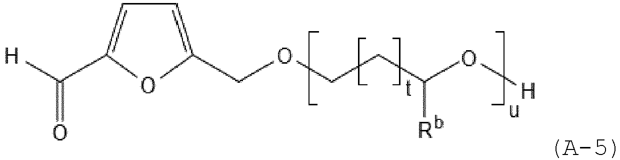 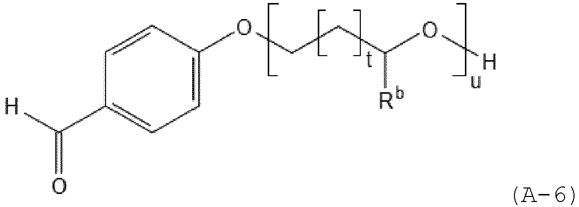 wherein:
- t is an integer ranging from 0 to 18, preferentially from 0 to 12, preferably 0 to 6, and more preferably still from 0 to 2;
- u represents an integer ranging from 1 to 380, preferably from 1 to 210, more preferentially from 1 to 140, and more preferentially still from 1 to 10; and t represents an integer ranging from 0 to 18, preferentially from 0 to 12, more preferably from 0 to 6, and more preferentially still from 0 to 2;
- R^{b} represents H or an alkyl radical comprising from 1 to 7 carbon atoms, preferentially from 1 to 3 carbon atoms.

8. Composition according to any one of Claims 1 to 7, wherein the (poly) urethane-aldehyde a) has one of the following formulae (I) or (II): 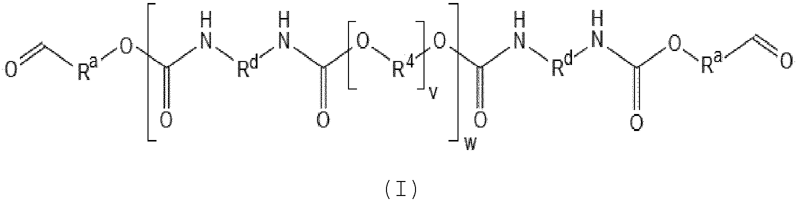 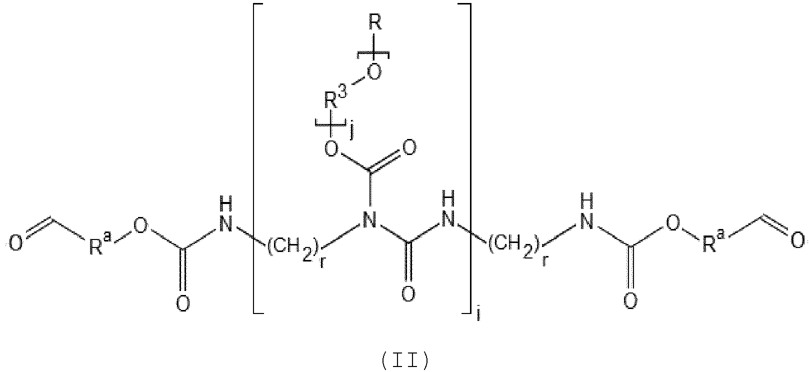 wherein:
- R^{a} is as defined above;
- R^{d} represents the following radical: 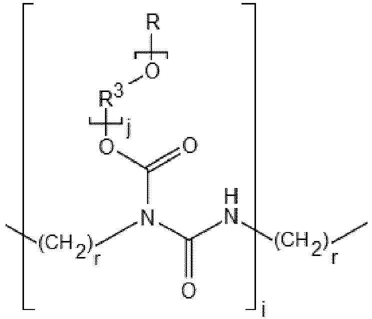 wherein i is an integer ranging from 1 to 2, j is an integer ranging from 0 to 9, and preferably 2 to 5, r is an integer ranging from 1 to 10, R represents a saturated or unsaturated, cyclic or acyclic, linear or branched, hydrocarbon chain comprising from 1 to 20 carbon atoms, preferably from 1 to 12 carbon atoms, or 6 to 14 carbon atoms, and R³ represents a linear or branched divalent alkylene group having from 2 to 4 carbon atoms and preferably a divalent propylene group;
- R⁴ represents a divalent hydrocarbon radical derived from a polyol by replacement of each of the two hydroxyl groups with a free valency;
- v is an integer such that the number-average molecular weight of the polyether block of formula -[OR⁴]ᵥ- ranges from 60 g/mol to 22 000 g/mol, preferably from 600 g/mol to 18 000 g/mol, preferably 1000 g/mol to 12 000 g/mol, preferably from 1000 to 8000 g/mol and more preferentially still from 1000 g/mol to 4000 g/mol;
- w is an integer such that the number-average molecular weight (Mn) of the (poly)urethane-aldehyde of formula (I) ranges from 500 g/mol to 22 000 g/mol, preferably from 500 g/mol to 18 000 g/mol, more preferably from 500 g/mol to 12 000 g/mol, and more preferentially still from 600 g/mol to 5000 g/mol.

9. Composition according to any one of Claims 1 to 8, wherein the primary diamine is chosen from the group consisting of linear or branched aliphatic amines; aliphatic polyamines; polyetheramines; polyamidoamines; dimer fatty amines; derivatives of diamino acids such as, for example, the diamino ester or diaminoamide derivatives thereof; amines of the following formula (B): H₂N-CH₂-Z-CH₂NH₂ wherein Z represents a linear or branched, cyclic, aliphatic or aromatic, saturated or unsaturated divalent hydrocarbon radical, preferably comprising from 1 to 38 carbon atoms, said hydrocarbon radical being optionally interrupted by one or more heteroatoms chosen from -S-, -O- and/or one or more tertiary amine divalent groups -NR'- with R' representing a linear or branched, saturated or unsaturated alkyl group, comprising 1 to 22 carbon atoms, preferably from 1 to 18, preferably from 1 to 14, preferentially from 1 to 10 and advantageously from 1 to 6 carbon atoms;
and mixtures thereof.

10. Polyimine A obtained via a process comprising a step of reaction between at least:
a) a (poly)urethane-aldehyde comprising at least 2 aldehyde functions;
b) a primary diamine;
c) optionally in the presence of a primary monoamine or a monoaldehyde if the -CHO/NH₂ molar ratio is other than 1;
**characterized in that** said (poly)urethane-aldehyde a) is a (poly)urethane-dialdehyde comprising an allophanate radical.

11. Polyimine A according to Claim 10, **characterized in that** the (poly)urethane-dialdehyde is obtained by reaction between:
- at least one polyisocyanate C comprising at least one allophanate radical; and
- at least one hydroxyaldehyde.

12. Polyimine A according to Claim 11, **characterized in that** the (poly)urethane-dialdehyde is obtained by reaction between:
- at least one polyisocyanate C comprising at least one allophanate radical; and
- at least one hydroxyaldehyde;
in amounts such that the NCO/OH molar ratio (r2) ranges from 0.95 to 1.05, preferably is equal to 1.

13. Polyimine according to either one of Claims 11 and 12, **characterized in that** the polyisocyanate C is the HDI allophanate having in particular the following formula (Y1) :

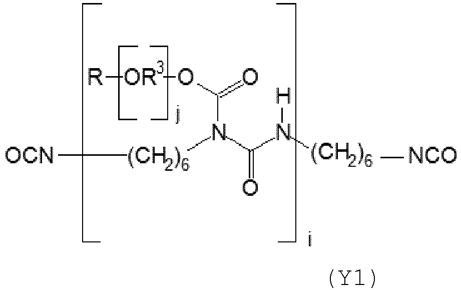

14. Polyimine according to any one of Claims 10 to 13, **characterized in that** the polyisocyanate C is a polyurethane comprising at least two NCO end functions which is prepared by a process comprising a polyaddition reaction E1):
i) of at least one polyisocyanate;
ii) with at least one polyol,
in amounts such that the NCO/OH molar ratio (r1) is strictly greater than 1;
step E1) preferably using at least one HDI allophanate, preferably having the following formula (Y1):

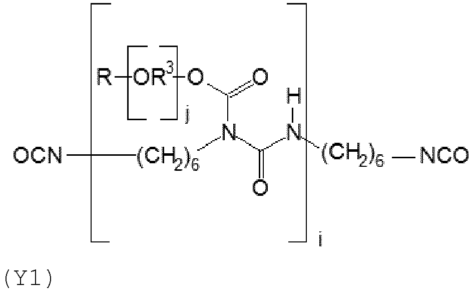

15. Polyimine A according to any one of Claims 10 to 14, **characterized in that** the (poly)urethane-aldehyde a) has one of the following formulae (I) or (II): 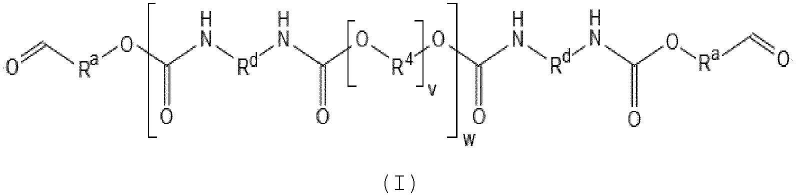 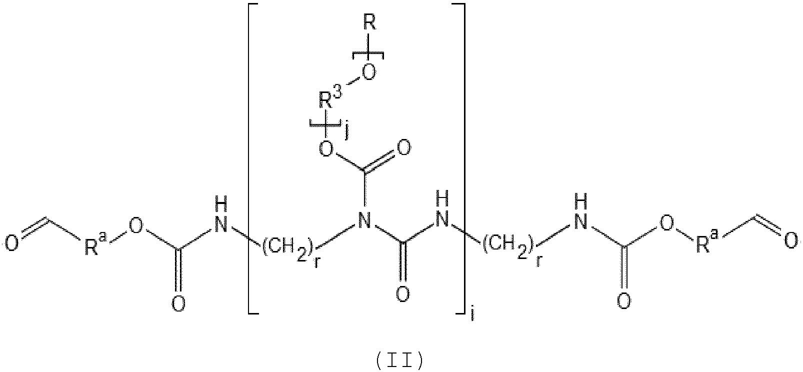 wherein:
- R^{a} is as defined above;
- R^{d} represents the following radical: 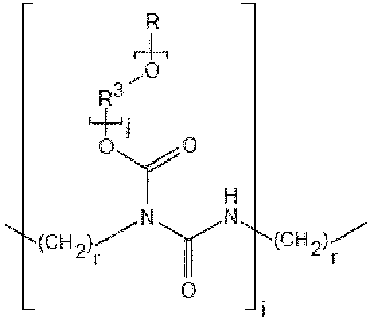 wherein i is an integer ranging from 1 to 2, j is an integer ranging from 0 to 9, and preferably 2 to 5, r is an integer ranging from 1 to 10, R represents a saturated or unsaturated, cyclic or acyclic, linear or branched, hydrocarbon chain comprising from 1 to 20 carbon atoms, preferably from 1 to 12 carbon atoms, or 6 to 14 carbon atoms, and R³ represents a linear or branched divalent alkylene group having from 2 to 4 carbon atoms and preferably a divalent propylene group;
- R⁴ represents a divalent hydrocarbon radical derived from a polyol by replacement of each of the two hydroxyl groups with a free valency;
- v is an integer such that the number-average molecular weight of the polyether block of formula
- [OR⁴]ᵥ- ranges from 60 g/mol to 22 000 g/mol, preferably from 600 g/mol to 18 000 g/mol, preferably 1000 g/mol to 12 000 g/mol, preferably from 1000 to 8000 g/mol and more preferentially still from 1000 g/mol to 4000 g/mol;
- w is an integer such that the number-average molecular weight (Mn) of the (poly)urethane-aldehyde of formula (I) ranges from 500 g/mol to 22 000 g/mol, preferably from 500 g/mol to 18 000 g/mol, more preferably from 500 g/mol to 12 000 g/mol, and more preferentially still from 600 g/mol to 5000 g/mol.
